# EUROPEAN PATENT APPLICATION

(11) **EP 1 338 979 A1**
(43) Date of publication of application: **27.08.2003**
(21) Application number: 02003476.5
(22) Date of filing: 14.02.2002
(51) Int. Cl.: G06F 17/30

(54) **Method and apparatus for graphically defining and modifying of complex data types in relational databases**

(71) Applicant: SUN MICROSYSTEMS, INC., Palo Alto, California 94303 (US)
(72) Inventor: Janssen, Ocke, 20255 Hamburg (DE)
(74) Representative: Becker Kurig Straus

(57) **Abstract**

This invention relates to a database management system (DBMS). More specifically, the invention relates to a method and apparatus for graphically defining a complex type and for retrieving and modifying a complex type. The complex type may be employed for defining the data type of a table of a database, especially of a relational database. The database provides basic types wherein the complex type is composed of these basic types the complex type having a hierarchical structure. The complex type is graphically defined and modified, respectively. The resulting hierarchical structure of the complex type is displayed. The finished complex type is implemented, wherein the implementing of the complex type may be a storing of the complex type, an employing of the complex type for defining data type within the database or a passing over of the definition of the complex type for further processing and/or employing. A code sequence or a set of instructions may be generated from the user-defined defined and modified complex type, respectively. The code sequence or a set of instructions may be applied to the database management system (DBMS), respectively, for example for defining the data type of a column or several columns of a table of a database. The passing over for further processing may involve a software tool for defining/modifying tables of a database.
Preferably, the database management system is a relational structured query language (SQL) database management system.

## Description

### FIELD OF THE INVENTION

The present invention relates to defining and modifying of complex types for usage within a relational database and, more particularly, the invention relates to the graphical defining of complex types based on graphical elements, menus and forms for defining and modifying complex hierarchical data types, preferably for a table of a relational database. Further, corresponding apparatus and network systems for defining and modifying of complex types are provided.

### DESCRIPTION OF THE RELATED ART

Today, databases, especially relational databases, are commonly employed and widely distributed for storing, organizing, managing and querying data and thus form a conventional tool used in connection with computers and computer networks. So-called relational databases are based on table structures. These tables are organized in columns and rows. A row of a table comprises a dataset and record, respectively. A dataset comprises a plurality of entries, wherein each of the plurality of entries is related to the type defined for the respective column. Correspondingly, each column of a table comprises different entries to the same type (or subject respectively) wherein each entry of a column bears upon the entries of the corresponding data within the respective row.

The stored data form the actual database, wherein - in case of a relational database - data sets are stored as part of tables arranged in columns and rows and are logically linked in-between the tables. Applications to access the stored data are called database management systems (DBMS).

The combination of a database management system (DBMS) and data stored therewith will be referred to as a database.

SQL (structured query language) is a standardized query language comprising all necessary language elements to perform all operations accruing during the usage of relational databases. The standard SQL underlies the standardization of the ANSI (American national standardization institute) and ISO (international standardization organization) and is a de facto standard for operating relational databases. Currently, the SQL2 or SQL 92 standard is valid.

The dramatic increase of the powerfulness at the same time increases the complexity of the usage of the database and especially the defining of user-defined new types, herein column types of tables. Further, the complexity of the language definition leads to a complex definition of user-defined complex data types. Even advanced users may have problems to draft and formulate a corresponding SQL 92 statement. Therefore the present invention tries to present a method, a system and an apparatus for graphically defining user-defined complex types. The graphical defining may enable a user to intuitively define new complex data types for table columns.

It is desirable to provide a simple graphical defining method to enable a user to handle complex types for structures of databases in an adequate and time saving operational way.

It is further desirable to provide a simple graphical modifying method to enable a user to handle complex types for structures of databases in an adequate and economic operational way.

It is further desirable to provide apparatus for graphically defining and graphically modifying, respectively, to enable a user to handle complex types for structures of databases in an adequate and self explanatory operational way.

It is further desirable to provide network systems for graphically defining and graphically modifying, respectively, to enable a user to handle complex types for structures of databases in an adequate and performing operational way.

It is further desirable to provide a respective system and apparatus enabling a user to operate such a method of graphically defining complex types of databases.

### SUMMARY OF THE INVENTION

According to an embodiment of the invention, a method for defining a complex type for a relational database is provided. The database already provides a plurality of basic types. A data type may be used to define the properties of data and reserved storage space for handling data that is assigned and stored within a corresponding part of the table. The method according to a first aspect of the invention is carried out by :
- providing a graphical user interface (GUI) responsive to user input to define said complex type as a hierarchical structure of basic types,
- receiving user input defining said complex type,
- displaying said complex type as a hierarchical structure of basic types in response to the user input, and
- storing a definition of said complex type.

The method according to another aspect is carried out by graphically defining said complex type. That is, the method for graphically defining said complex type provides a graphical user interface (GUI) to a user on a corresponding user display. A graphical definition of said complex type is received, the graphical definition comprising a hierarchical structure of the complex type and may comprise the subordinate types, properties thereof and the like. The graphical definition of the complex type is based on basic types. Further, the graphical definition may be inputted by a user who employs features and functions of the graphical user interface (GUI). The hierarchical structure of the complex type is displayed on the user display. The resulting defined complex type is finally stored. The complex type may define a data type of at least a part of a table of the relational database.

According to another embodiment of the invention, the receiving of the graphical definition of the complex type further comprises a receiving of a graphical definition of the complex type on the basis of basic types and/or other complex types. The other complex types are also based on the basic types provided by the database and the other complex types also have a hierarchical structure.

It may be noted that the complex type comprises a plurality of type elements such as basic type elements or complex type elements. The type elements may represent the single data types comprised by the complex type. In order to display the complex type graphical elements may be assigned to the type elements of this complex type. The properties of the type elements and the hierarchical structure of the complex type may be represented by the graphical elements and their hierarchical arrangement and structure, respectively. Hence, the displayed graphics comprising graphical elements and their hierarchical structure may be converted unambiguously to the definition of the corresponding complex type and vice versa.

According to another embodiment of the invention, a method for retrieving and modifying a complex type of a relational database is provided. The database already provides a plurality of basic types. The method is carried out according to a first aspect of the invention by
- retrieving said complex type, said complex type having a hierarchical structure of basic types,
- displaying said complex type,
- providing a graphical user interface (GUI) responsive to user input to modify said complex type,
- receiving user input modifying said complex type,
- displaying said modified complex type as a hierarchical structure of basic types, and
- storing a definition of said complex type.

According to a second aspect the method is carried out by retrieving and graphically modifying the complex type. That is, the method for retrieving and graphically modifying a complex type provides a graphical user interface (GUI) to a user on a corresponding user display. The complex type is retrieved. The complex type has a hierarchical structure. A graphical modification of said complex type is received, the graphical modification comprising a hierarchical structure of the complex type and may comprise the subordinate types, properties thereof and the like. The graphical modification of the complex type is based on basic types. Further, the graphical modification may be inputted by a user who employs features and functions of the graphical user interface (GUI). The hierarchical structure of the complex type is displayed on the user display. The resulting modified complex type is finally stored. The modified complex type may define a data type of at least a part of a table of the relational database.

The retrieving of the complex type may be a retrieving of the complex type from a memory of a processing device or a readable storage medium such as a hard disk. The retrieving of the complex type may further comprise a decoding of stored information to obtain an interpretable and processable definition of the complex type. Moreover, the retrieving of the complex type may be a retrieving of the complex type from a database comprising a plurality of definitions of complex types. This database may be dedicated to the storage of complex types to be retrieved for modifying.

According to another embodiment of the invention, the complex type may be extracted from a relational database, particularly, the complex type may be extracted from a part of a table of a relational database. A part of a table may be one column or several columns of a table.

According to another embodiment of the invention, the receiving of the graphical modification of the complex type further comprises a receiving of a graphical modification of the complex type on the basis of other complex types. The other complex types are also based on the basic types provided by the database and the other complex types have also a hierarchical structure.

According to another embodiment of the invention, the graphical user interface (GUI) provides a plurality of graphical control elements. The term graphical control element shall describe components of the graphical user interface (GUI) presented to a user thereof, such as windows, menus, especially drop-down menus, context related menus, selection boxes, a list allowing to select single or multiple list items, input boxes and input forms and the like. Several of these various graphical control elements may be arranged in a predefined structure which may be designated in the following as a graphical form. The user of the graphical user interface may select, input, mark, unmark, drag, move and the like, employing inputting components like keyboard, a mouse, a trackball or a graphical pointer controlled by a mouse or the like. Furthermore, graphical depictions, icons etc may be also provided by the graphical user interface (GUI). The graphical depictions, icons et cetera may be controlled by the user by selecting, moving dragging and in similar ways. Herein, the displaying of the complex type will be based on graphical depictions composed of graphical elements representing the subordinate structure of the total hierarchical structure. The occurrence and arrangement of the subordinate graphical elements may be controlled by a user employing the graphical control elements or by accessing functions of the graphical elements for example by selecting. The graphical depictions composed of graphical elements will be described below in more detail.

The employment of the graphical control elements or the direct employment of the graphical elements of the graphical user interface (GUI) may initiate a set of information in accordance with the respective selected function of the element. The complete set of information generated by the user offered functions of the graphical user interface and the elements comprised thereby may be a complete coded graphical definition of the complex type which may has been defined by the user. This information may be received for defining the complex type and for generating a respective depiction of the complex type showing its hierarchical structure.

According to another embodiment of the invention, the graphical user interface (GUI) may comprise providing of graphical forms for defining and modifying properties of a type element of the complex type, respectively. The providing of the graphical forms may comprise providing of presetted, predefined or default property values. In case of defining a new complex type predetermined or default values may be offered to a user, in case of modifying a retrieved complex type presetted property values in accordance with the former defined properties may be offered to a user allowing the user to modify specifically property values. A user may fill in the properties. The forms may be adaptive to the input of the user, which means that the form elements may be changed according to the content of the input of the user.

According to another embodiment of the invention, the graphical user interface (GUI) may comprise providing of graphical menus for defining and modifying properties of a type element of the complex type, respectively. The providing of the graphical forms may comprise providing of presetted, predefined or default property values. A user may select at least one menu item of the graphical menus. The menus and the forms may be combined to a complex form. Selection of menu items or information filled in by the user may initiate and/or control the appearance of the complex form or the graphical form and/or the menu, respectively. The adapted appearance of a form, menu or complex form may guide and support the user while inputting and selecting.

According to another embodiment of the invention, at least one graphical menu may be a graphical context menu. The appearance and the menu items of a context menu may be adapted to previous inputted information and selected options.

According to another embodiment of the invention, the complex type may comprise a plurality of type elements. The type elements of the complex type may be distinguished with respect to the hierarchical structure, therefore, the type elements comprise structuring elements and basic elements. The structuring elements comprise further structuring elements and also basic type elements, whereas the basic type elements are based on the basic types provided by the database and hence do not comprise further type elements. The structuring elements may be used to set up the hierarchical structure comprising different hierarchical levels. Each structuring element introduces a hierarchical level to the complex type. The respective lowest hierarchical level corresponding to the structure type elements of the complex type may comprise only basic type elements.

According to another embodiment of the invention, the displaying of the hierarchical structure of the complex type is based on graphical elements. The graphical elements may be related to the type elements of the complex type and hence, the graphical elements may be divided into graphical structuring elements and graphical basic elements according to the structuring elements and the basic elements, respectively, described in detail above. According to the graphical user interface presented and described above, the graphical elements may be controlled by graphical control elements or may be controlled directly.

According to another embodiment of the invention, the complex type may be implemented. An implementing of the complex type may be a handing over of the complex type to further operations which require the complex type or which may offer additional utilization or processing of the complex type. The implementing of the complex type may comprise a coding or recoding of the complex type or the definition of the complex type.

According to another embodiment of the invention, the complex type may be applied upon a database. The applying may be performed by directly transferring a definition of the complex type to the relational database and initiating the implementation of the complex type for example as a definition of a table, part of a table such as a column or several columns or several tables of a database. The definition may be obtained by coding or recoding as described above. The resulting complex type may be also to alter an existing definition with respect to this new complex type.

According to another embodiment of the invention, the relational database may be a structured query language (SQL) database. The SQL database may be a database operated by the SQL 92 standard.

According to another embodiment of the invention, a SQL type statement may be generated automatically based on the complex type. The SQL statement may be a SQL statement according to the SQL 92 standard.

According to an embodiment of the present invention, a software tool for handling a complex type is provided. The software tool comprises program portions for carrying out the operations of the aforementioned methods when the software tool is implemented in a computer program and/or executed on a corresponding processing device. According to the aforementioned methods for defining and for retrieving and modifying a complex type, respectively, the software tool for handling a complex type may be a combination of a software tool for defining a complex type and a software tool for retrieving and modifying a complex type, whereas the software tool for handling a complex type may also be limited to the operations of the method for defining or retrieving and modifying a complex type.

According to an embodiment of the present invention there is provided a computer program for handling a complex type. The computer program comprises program code portions for carrying out the operations of the aforementioned methods when the program is executed on a computer or a network device. According to the aforementioned methods for defining and for retrieving and modifying a complex type, respectively, the computer program for handling a complex type may be a combination of a computer program for defining a complex type and a computer program for retrieving and modifying a complex type, whereas the computer program for handling a complex type may also be limited to the operations of the method for defining or retrieving and modifying a complex type.

According to an embodiment of the present invention, a computer program product for handling a complex type is provided which comprises program code portions stored on a computer readable medium for carrying out the aforementioned methods when the program product is executed on a computer or network device. According to the aforementioned methods for defining and for retrieving and modifying a complex type, respectively, the computer program product for handling a complex type may be a combination of a computer program product for defining a complex type and a computer program product for retrieving and modifying a complex type, whereas the computer program product for handling a complex type may also be limited to the operations of the method for defining or retrieving and modifying a complex type.

According to another embodiment of the invention an apparatus for defining a complex type of a relational database is provided. The database provides a plurality of basic types. According to a first aspect the apparatus comprises:
- an editor for providing a graphical user interface responsive to user input to define a complex type as a hierarchical structure of basic types,
- a display for displaying said complex type as a hierarchical structure of basic types, and
- a component for storing said complex type.

The apparatus in accordance with another aspect comprises an editor for graphically defining the complex type on the basis of the basic types, the complex type having a hierarchical structure, a display for displaying the hierarchical structure of the complex type and a component for storing the complex type. The complex type may define at least a part of a table of the relational database.

The editor may provide a graphical user interface and a component for receiving a graphical definition of the complex type. The component for receiving a graphical definition may receive user inputs employing the graphical user interface (GUI). The complete set of user inputs may represent the graphical definition of the complex type definition.

The component for storing the complex type resulting from the defining process may comprise access to a memory of for example a processing device. Moreover, the component for storing may comprise access to a storage medium which may be readable by a processing device such as a hard disk. Further, the component for storing may comprise a database interface component allowing to transmit the complex data type to a database management system providing storage functionality.

According to another embodiment of the invention an apparatus for retrieving and modifying a complex type of a relational database is provided. The database provides a plurality of basic types. The apparatus according to a first aspect further comprises
a component for retrieving said complex type, said complex type having a hierarchical structure of basic types,
- a display for displaying said hierarchical structure of said complex type,
- an editor for providing a graphical user interface responsive to user input to define a complex type as a hierarchical structure of basic types, and a component for storing said complex type

In accordance with another aspect the apparatus comprises a component for retrieving the complex type, the complex type having a hierarchical structure, a display for displaying the hierarchical structure of the complex type, an editor for graphically modifying the complex type on the basis of the basic types and a component for storing the complex type. The complex type may define at least a part of a table of the relational database.

The editor may provide a graphical user interface and a component for receiving a graphical definition of the complex type. The component for receiving a graphical definition may receive user inputs employing the graphical user interface (GUI). The complete set of user inputs may represent the graphical definition of the complex type definition.

The component for storing the complex type resulting from the defining process may comprise access to a memory of for example a processing device. Moreover, the component for storing may comprise access to a storage medium which may be readable by a processing device such as a hard disk. Further, the component for storing may comprise a database interface component allowing to transmit the complex data type to a database management system providing storage functionality.

The component for retrieving the complex type may be a component for reading a definition of the complex type from a memory of a processing device or a storage medium readable by a processing device. Further, the component for retrieving may be a database interface component allowing to retrieve the complex data type from a database management system providing retrieving functionality. The component for retrieving may also be a database interface component allowing to extract a definition of the complex type from a database wherein the definition of the complex type is employed for defining the structure of a table, a part of a table or several tables.

According to another embodiment of the invention the apparatus may further comprise a relational database. The relational database may be a structured query language (SQL) database and the access to the SQL database may be controlled by an appropriate database management system which may offer an interface, for example also an application program interface (API).

According to another embodiment of the invention a network system for defining a complex type of a relational database is provided. The network system comprises a relational database and an apparatus for defining a complex type of a relational database.

According to another embodiment of the invention a network system for retrieving and modifying a complex type of a relational database is provided. The network system comprises a relational database and an apparatus for retrieving and modifying a complex type of a relational database.

Further features and advantages of the present invention will become apparent from the following detailed description of embodiments of the invention in connection with the accompanying drawings.

### BRIEF DESCRIPTION OF THE DRAWINGS

- Fig. 1a: illustrates an exemplary model of a customer management system;
- Fig. 1b: illustrates tables of a database according to the exemplary model of a customer management system of Fig. 1a;
- Fig. 1c: depicts a selection of further relationship symbols to be used for entity-relationship modeling;
- Fig. 2a: shows a flow chart illustrating a sequence of operations according to an embodiment of the method for defining a complex type with respect to the present invention;
- Fig. 2b: shows a flow chart illustrating a sequence of operations according to Fig. 2a and with respect to an embodiment of the invention;
- Fig. 2c: shows a flow chart illustrating a sequence of operations according to another embodiment of the method for retrieving and modifying a complex type with respect to the present invention;
- Fig. 3a: shows a flow chart illustrating a sequence of operations according to an embodiment of the method for defining a complex type;
- Fig. 3b: shows a flow chart illustrating a sequence of operations according to an embodiment of the method for defining a complex type on the basis of an exemplary complex type "ADDRESS";
- Fig. 3c: depicts a graphical form for defining a type elements of a user-defined complex type according to the sequence of operations described in Fig. 3a and Fig. 3b.
- Fig. 4a: depicts an exemplary complex type "ACCOUNT";
- Fig. 4b: depicts a context menu according to the type element defining illustrated in and with respect to Fig. 3c;
- Fig. 4c: shows an exemplary complex type "EMPLOYEE" on the basis of complex types "ADDRESS" (Fig. 3b) and "ACCOUNT" (Fig. 4a) in a first depiction;
- Fig. 4d: shows an exemplary complex type "EMPLOYEE" on the basis of complex types "ADDRESS" (Fig. 3b) and "ACCOUNT" (Fig. 4a) in a second depiction;
- Fig. 5a: shows an exemplary complex type "ADDRESS_2" on the basis of complex types "ADDRESS" (Fig. 3b);
- Fig. 5b: shows an exemplary complex type "EMPLOYEE_2" on the basis of complex types "ADDRESS_2" (Fig. 5a) and "ACCOUNT" (Fig. 4a);
- Fig. 6: shows a flow diagram of the interacting of a user, a graphical user interface (GUI) according to an embodiment of the invention and a database;
- Fig. 7a: illustrates an apparatus according to an embodiment of the method for defining a complex type of the present invention;

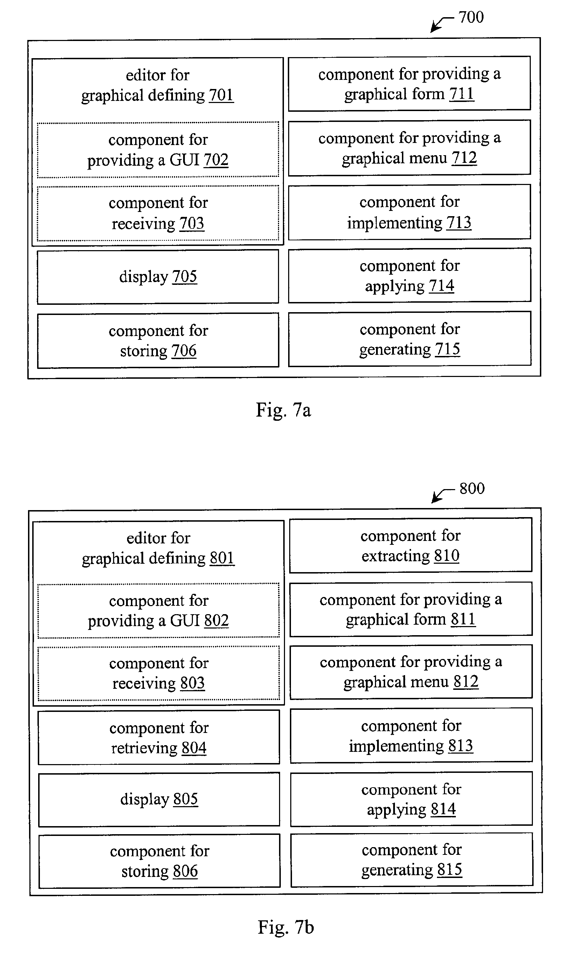

- Fig. 7a: illustrates an apparatus according to an embodiment of the method for retrieving and modifying a complex type of the present invention;

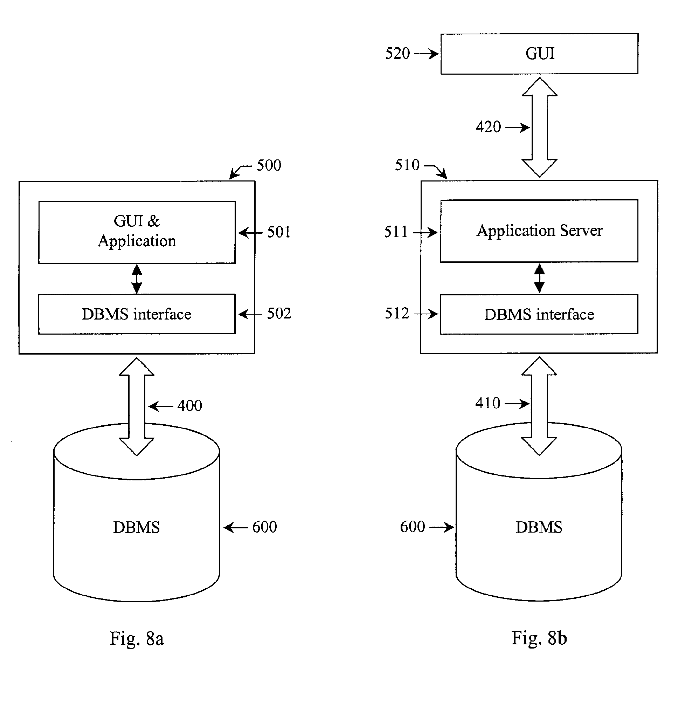

- Fig. 8a: illustrates an arrangement of a database management system (DBMS) and an application processing and graphical user interface (GUI) displaying device and
- Fig. 8b: illustrates an arrangement of a database management system (DBMS) and an application server and a graphical user interface (GUI) displaying device.

### DETAILS DESCRIPTION OF THE PREFERRED EMBODIMENTS

In the drawings of the figures same reference numerals are used to refer to same elements in the drawings.

In the following a short introduction to the entity-relationship model will be given. The entity-relationship model enables to describe complex relationships of processes and methods which shall be modeled and reproduced by the database in order to allow the employment of a database.

An entity describes a relation. The entity defines an entity name comprising a plurality of attributes or properties which are in relation to each other. Relations or entities are designated as tables within relational databases such as SQL databases, respectively.

The attributes define certain properties of the relations. Therefore, the attributes may be simply abbreviated as properties. Formerly, attributes may not define composite values or multiple values when using SQL. Newly standardized SQL enables the structuring of properties such that composite values are allowed. These compositions may be realized by structured property or attribute types, respectively. Structured types and the defining thereof are within the scope of the present invention and will be described below. Legal values of the properties may have to be defined by a respective complex type. A value NULL may be always allowed to indicate an empty value. An attribute or property represents a data field of the database, respectively.

In order to understand the complexity of database structures a short description of a modeling method for databases will be given.

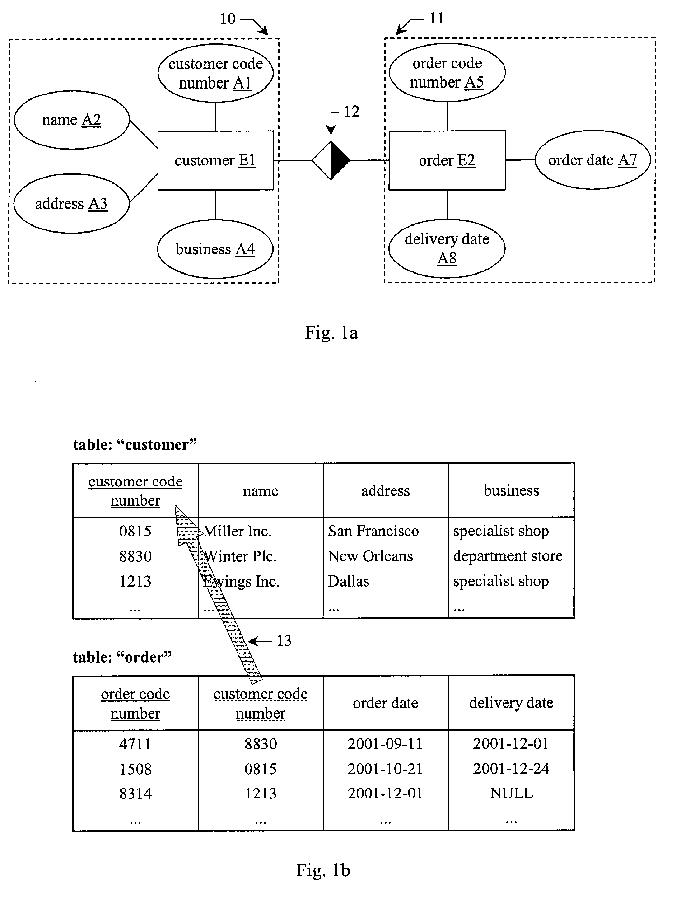

Fig. 1a illustrates an exemplary model of a customer management system.

The entity E1 may be designated as "customer" and be depicted as rectangular. The corresponding accompanying attributes or properties may be depicted as elliptical text surroundings. The entity "customer" E1 may comprise four properties "customer code number" A1, "name" A2, "address" A3 and "business" A4. The complete unity of the entity "customer" E1 and the properties thereof is illustrated by enclosure 10. The entity "customer" E1 may include all necessary information on customer to be managed by the management system.

A further entity E2 may be designated as "order". The corresponding accompanying attributes or properties of the entity "order" E2 may be designated as "order code number" A5, "order date" A7 and "delivery date" A8. The unity of entity "order" E2 and the properties thereof is illustrated by enclosure 11. The entity "order" E2 may include all necessary information on orders of customer.

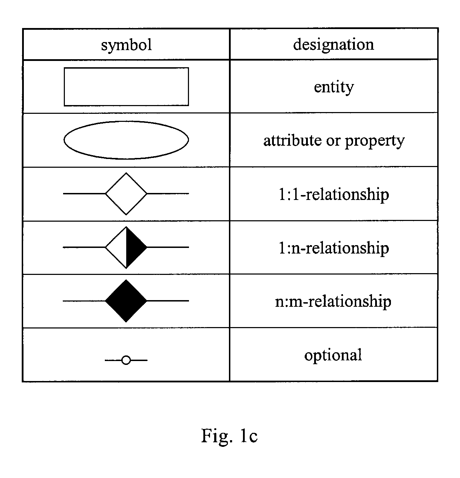

The entity "customer" E1 and the entity "order" E2 may have to be set into a certain relationship. Only a relationship between the two entities may allow a meaningful combination of the two entities enabling a user to extract information from the a database according to these entities. The respective relationship is depicted by the relationship symbol 12, shown in Fig. 1. This relationship 12 may illustrate a "1:n-relationship".

The "1:n-relationship" 12 means that one customer may have assigned several orders, wherein the customer is defined according to entity "customer" E1 and each of the assigned orders is defined according to entity "order" E2. Only a definition of the relation between entities allows to model real world processes and methods in order to reproduce a respective database.

The following figure presents possible derived tables structure of the above presented entity-relationship model. Exemplary entries may enlighten additionally the above described model.

Fig. 1b illustrates tables of a database according to the exemplary model of a customer management system of Fig. 1a. The entity-relationship model shown in Fig. 1a may be realized by the table "customer" and the table "order". The columns of these table are defined according to the attributes or properties, respectively, of the corresponding entities "customer" E1 and "order" E2 depicted in Fig. 1a, respectively.

The definition of a column of the table "customer" designates the definition of the kind of data which may be stored therein. According to the attribute "customer code number" each customer may have assigned a unique number coding the respective customer. Further, the attribute "name" comprises the customer's name, the attribute "address" an address information of the customer and the attribute "business" a respective description of the kind of business the respective customer runs. Herein, one customer may be completely described by a set of information comprising one entry of each column of the table "customer". Such a dataset may be designated as a tuple, i.e. a dataset obtained from a row of the table. For example the second customer may have assigned the "customer code number" 8830. His "name" is "Winter Plc." is placed ("address") in "New Orleans" and runs ("business") a "department store".

Further, the second table "order" may summarize a list of orders. The table "order" may be defined according to the entity "order" E2 shown in Fig. 1a. Correspondingly, the table "order" may comprise a column "order code number", "order date" and "delivery date". The second tuple of table "order" may be interpreted like following: a product with the product number "1508" was ordered ("order date")on October 21^{st}, 2001 and delivered ("delivery day")on December 24^{th}, 2001. A table containing these information may enable a reconstruction which product has been ordered and delivered but information according to the customer is missing. The relation of order information and customer information is depicted in Fig. 1a as a relationship between the both entities "customer" and "order". This relationship may be realized by including an additional column in table "order" containing "customer code numbers" according to the "customer code numbers" of the first column in table "customer" whereby this extension may allow a back-referencing to the respective customer given the according order. This reference may allow a user to recall information from the database comprising for example a data set of a customer and all orders commissioned by this customer.

The simple examples presented in Fig. 1a and Fig. 1b enlighten the importance of the structuring of a database. The presented examples have been solved by employing standard no-structured column data types which is adequate for this example. But normally, more complex real world processes may have to be modeled by distinct adapted table structures and column data types of databases. Newly standardized column data types allow user of a relational database and especially of a SQL database to define complex structured column types. The possibility to define complex structured types defining the type of entries within a column enables a user of a database to structure the database or the tables of the database in a more adequate way, respectively. The structuring of a database comprising the structuring of the tables and the column types may lead to a reliable and as far as possible adaptation of the process to be modeled and reproduced by the database.

Moreover, the complex structured types may allow a porting or taking over of an once defined type by the user to similar or same modeling problems. Especially the taking over of user-defined complex structured types for defining the types of columns may enable a user of a database to set up or modify a database according to a before established database or structure of a database in a fast and reliable way, respectively.

According to the description above entities have to be set into relation in order to model real world processes using databases. Fig. 1c depicts a selection of further relationship symbols to be used for entity-relationship modeling. The selection may not be limited since only the principles of databases and the reproducing of real world processes, such as economical processes, may be described in order to enlighten the importance of a meaningful structuring of the table and column definitions, respectively. The linking of entities defining datasets may be described by different linking operations or linking symbols. The selections represented in Fig. 1c depicts binary relationship operators. Unitary or tertiary operators may be derived therefrom.

Entity: An entity may be depicted using a rectangular. Attributes and/or relationships which may be in connection with an entity may be illustrative connected thereto by lines. A name or designation may be assigned to an entity, respectively. An entity may represent a table within a database.

attribute or property: An attribute or property may be depicted using an elliptical surrounding. An attribute or property may define a type of data which is in connection with a respective entity to which the attribute or property is part of. The attributes or properties of an entity define the type of data which are handled by the entity and therefore the column type of a table defined by the corresponding entity.

1:1-relationship: The 1:1-relationship may link or assign one dataset of a table according to an entity to one dataset of a table according to another entity, respectively. Herein, it may be understood that the dataset may be a row or a tuple of a table. An example of the 1:1-relationship may be: " One head of a department manages exactly one department."

1:n-relationship: The 1:n-relationship may link or assign one dataset of a table according to an entity to a plurality of datasets of a table according to another entity, respectively. Herein, it may be understood that the dataset may be a row or a tuple of a table. An example of the 1:n-relationship may be: "A head of a department supervises the plurality of employees of the department."

n:m-relationship: The n:m-relationship may link or assign a plurality of datasets of a table according to an entity to a plurality of datasets of a table according to another entity, respectively. Herein, it may be understood that the datasets may be a row or a tuple of a table. An example of the n:m-relationship may be: "The employees of the sales department are in charge of the customers of the company."

optional: The linking of table entries or datasets of tables may be optional, respectively. An example of an optional linking relationship may be: "A user may have a phone". Each above presented relationship may be amended by an optional relationship. A "may" have to be included into above presented examples phrases to add the optional character.

In Fig. 1a a 1:n-relationship links a tuple of the entity "customer" E1 to a plurality of tuples of the entity "order" E2. This means that the table "customer" of Fig. 1b contains only one entry of each customer, whereby the customer code number which links the table "customer" and "order" together may contain a plurality of order datasets but at least one order dataset containing the same customer code number. The relationship between the two entities may have added an optional relationship indicating that also customer datasets may be contained in the "customer" table having no associated order dataset in the "order" table.

The brief introduction given in Fig. 1a to 1c point out to the complexity of database structures derived from the processes to be modeled. The complexity increases with the possibility to include complex structured data types of columns of tables. Therefore, especially illustrative and graphically defining of such structures simplifies the overview for a user of such structured database. In the following, the graphical defining of complex types is described amended by several examples according to embodiments of the present invention.

Complex types are based on basic types such as described in combination with the attributes of entities. A data type has to be assigned to each attribute or to each column of a table, respectively, in order to reserve respective data storage areas within a database and in order to define the properties for interpreting, viewing and manipulating of the data of the table columns. Complex types are based on a basic set of basic types provided by the database. In contrast to the above described tables of databases complex types comprise more than one basic data type similarly to a grouping of several columns of a table or attributes, respectively. Moreover, the basic data type may be arranged hierarchically within the complex type improving the logical structuring of the database.

Graphical user interfaces (GUI) are well known, especially to the users of actual personal computers. Graphical user interfaces (GUI) allow to provide a displaying and inputting interface to a user the usage of which may be learned in an easy and fast way. Functions of software programs employing graphical user interfaces (GUI) may be presented may graphical elements of the graphical user interfaces. Common graphical elements of such graphical user interfaces may be graphical icons; menus, graphical menus and context menus; graphical forms and the like. Further graphical elements may present a describing graphical elements to the user and may be processed, modified, added and removed by user action. The items of the input controlling elements may represent functions or features of the respective corresponding related software program. The items may be activated or selected using a keyboard or a mouse or the like.

According to the aforementioned, the complex type comprises a plurality of type elements. The type elements may represent the data types comprised by the complex type. Further, the type elements may comprise basic type elements and structuring type elements wherein the structuring type elements may comprise further basic type elements and structuring type elements. The framework of the hierarchical structure of a user defined complex type may be based on the structuring type elements. A dedicated structuring type element may used for illustrating the hierarchical root of the user-defined complex type, namely a root type element. Each complex type may only comprise one root type element.

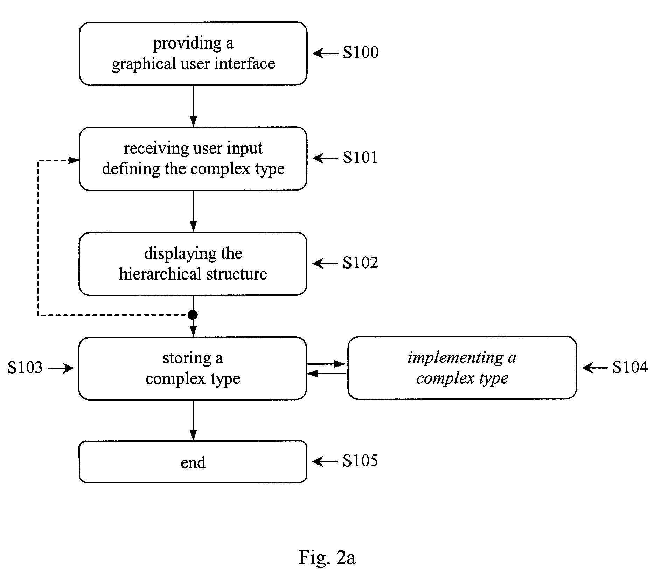

Fig. 2a shows a flow chart illustrating a sequence of operations according to an embodiment of the method for defining a complex type with respect to the present invention.

In an operation S100, a graphical user interface (GUI) may be presented to a user. The graphical user interface may be adapted for graphically defining complex and structured data types for databases, respectively, particularly relational databases and more particularly SQL databases. The graphical user interface (GUI) may provide graphical elements to the user for arranging of them within an area defined by the graphical user interface (GUI). Such graphical user interfaces (GUI) are well known and utilized for operation of for example a personal computers. Conventionally, the graphical elements may be graphical forms providing the possibility to add information, settings and/or properties by the user. The additional information may be limited to certain pre-defined selection presenting allowed and/or available additional information, settings and/or parameters/properties.

In a further operation S101, the complex type may be defined graphically by the user and a corresponding graphical definition may be received. In order to display the complex type graphical elements may be assigned to the above described and discussed type elements of this complex type. Therefore, the graphical elements may be distinguished among graphical basic type elements and graphical structuring elements according to the corresponding basic type elements and structuring type elements, respectively. Further a graphical root type element may also be available for displaying.

The properties of the type elements may be illustrated by displaying the corresponding graphical element wherein the properties may be depicted in a way uniquely interpretable by a user. The properties of a basic type element may be a designation, a data type, obligatory and/or optional parameters. The properties of a structuring type element may also be a designation, a data type, obligatory and/or optional parameters and further on a kind of depicted hierarchical appropriate illustrative depiction so that a user may be able to recognize the hierarchical structure of a complex type. Hence, the displayed graphics comprising graphical elements and their hierarchical structure may be converted unambiguously to the definition of the corresponding complex type and vice versa.

A user may control the arrangement of the graphical elements by the graphical user interface (GUI) via input requests and selections. Further, the user may assign properties and designations to the graphical elements. The graphical user interface may offer interface components to add, modify, remove and control each of the graphical elements to the user. Such interface components may be item lists, menus or forms allowing the user to control the hierarchical structure of the complex type or properties and designations of the graphical elements of the complex type. The display graphics related to the complex type and the underlying definition of the complex type are associated uniquely to each other.

The arrangement and the properties and designations of the graphical elements may be used for further operations of the sequence.

In a further operation S102, the complex type may be displayed. Particularly, the hierarchical structure of the complex type may be displayed. In order to display the complex type the above described graphical elements may be used for displaying illustrating the structure of the complex type. The graphical elements may further comprise information on the inputted or selected properties of the respective graphical element.

The operation S102 may be continued with an operation S101 or an operation S103. The continuation with operation S101 means that the operation S101 may be performed repeatedly allowing a user for example to modify or add graphical elements of properties thereof in order to adapt the complex type to the wished and desired structure and definition. The continuation with operation S101 means that the sequence of graphically defining the complex type may be finished, the complex type may comprise the hierarchical structure and the graphical elements corresponding to the needs of the user. Additionally, an optional operation S104 may be operated in sequence to operation S103. The branching of the operational sequence may be controlled by user input, i.e. the user may input a request indicating the completion of the operational process.

In an operation S103, the graphically defined complex type may be stored. The complex type may be stored in a random access memory, a readable storage medium or the like. A definition sequence in accordance with the complex type may be employed for coding the complex type in order to generate an appropriate storable definition of the complex type. The definition sequence may be a proprietary coding sequence or a coding sequence according to a standardized language for coding and programming, respectively. A typical standardized language employed for coding such a coding sequence might be the structured query language (SQL) standard, particularly the SQL 92 standard. The stored complex type may be employed for further processing or utilizing but also for formerly retrieving of the complex type.

In a further operation S105, the graphical defining of the complex type may be completed. The graphically defined hierarchical structure of the complex type and the definitions concerning the graphical elements, i.e. the properties and designations assigned to the graphical elements may be employed to generate the complex type comprising type elements. A resulting definition of the user-defined complex type by be stored.

The generation of the complex type may comprise a generation of a complex type statement according to structured query language (SQL). The structured query language (SQL) provides different statements to define complex types or the alter complex types of a previously defined complex types. Strongly simplified the respective structured query language (SQL) statements may have following taxonomy:

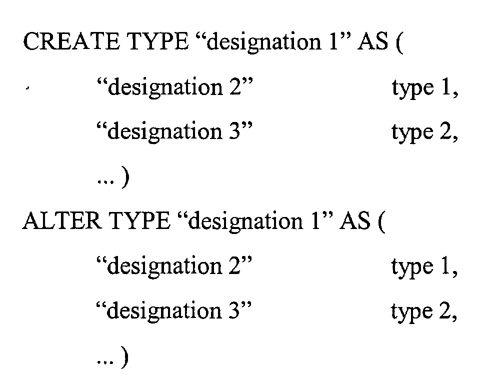

The name "designation 1" may present the designation of the complex type. The rows comprising "designation 2" and "designation 3" presents type elements of the complex type with respective data types named as "type 1" and "type 2", respectively.

The type elements "type 1" and "type 2" may be basic types of the database, correspondingly, the complex type "designation 1" may have only a single hierarchical level comprising the type elements "designation 2" and "designation 3". The type elements "type 1" and "type 2" may be complex types. Correspondingly, the complex type "designation 1" may have several hierarchical levels.

The structured query language (SQL) statements are known to those skilled in the art and are published in a plurality of documents.

In an operation S104, the graphically defined complex type may be implemented. The implementing of the complex type may comprise a transmitting of a definition of the complex type to further following processing processes or procedures employing the complex type. For example the resulting complex type may be transferred to a programming system allowing to set up databases and their structure. This programming system may receive and include the graphically defined complex type for utilization therein.

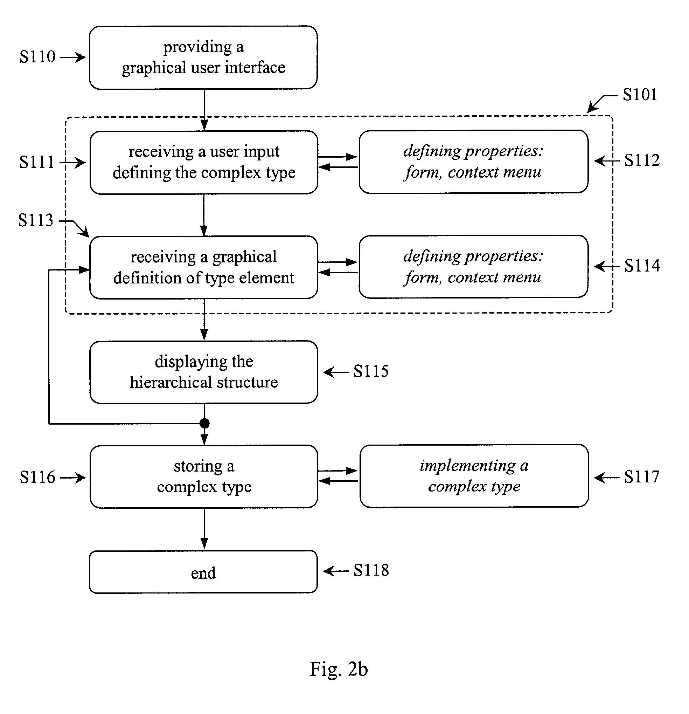

A detailed realization of the graphical defining according to operation S101 may be described in the following Fig. 2b. Further completing and advantageous details of the method for defining a complex type according to an embodiment of the present invention will be presented. Additionally, references will be made to Fig. 2a.

Fig. 2b shows a flow chart illustrating a sequence of operations according to Fig. 2a and with respect to an embodiment of the invention.

In an operation S110, a graphical user interface (GUI) may be presented to a user analog to operation S100 depicted in Fig. 2a. The graphical user interface may be adapted for graphically defining complex and structured types for databases, respectively, particularly relational databases and more particularly SQL databases. The graphical user interface (GUI) may provide graphical elements to the user for arranging of them within an area defined by the graphical user interface (GUI). Such graphical user interfaces (GUI) are well known and utilized for operation of for example a personal computers. Conventionally, the graphical elements may be graphical forms providing the possibility to add information, settings and/or properties by the user. The additional information may be limited to certain pre-defined selection presenting allowed and/or available additional information, settings and/or parameters/properties.

The following operations S111, S112, S113 and S114 illustrate a possible sub-sequence of operations according to the operation S101 depicted in Fig. 2a. The sub-sequence of operations may be illustrated by the dashed surrounding indicated by reference numeral S101 depicted in Fig. 2b.

In the operation S111, the graphical defining of the complex type may be initiated by the defining of basic properties, settings and information concerning the complex type. A corresponding graphical definition may be received. The operation S111 may be operated in combination with the operation S112.

In the operation S112, a graphical form, menu or root element may be provided by the graphical user interface (GUI) allowing a user to initiate the graphical defining of a complex type. A graphical element for controlling and guiding user inputs such as a graphical form may allow a user to define basic information of the complex type like a unique designation of the complex type for further utilization and processing. Further, context related information and/or optional parameters may be added additionally to complex type. Available and allowed information, settings and/or parameters/properties may be presented by a context menu to the user which may allow an interactive selection of desired menu items by the user while information presented by the menu may guide the user.

The providing of a graphical form for initializing the graphical defining of the complex type may be supported and/or guided and/or completed by offering a context menu containing menu item concerning obligatory or optional properties and/or information to be provided with the type defining form.

In the operation S113, the user may graphically define further type elements of the complex type and a corresponding graphical definition may be received. An element of a complex type may designate a certain distinct type but also a structured complex type. The elements within the complex type are arranged hierarchically. Further following examples of complex types will enlighten the properties of the elements and their hierarchical structure. The operation S113 may be operated in combination with the operation S114.

In the operation S114, the graphical defining may be performed by user input. The user input may be guided and performed by adequate design and configuration of the graphical user interface (GUI). Graphical elements of the graphical user interface (GUI), such as menus, assisting graphical forms and the like may guide the defining and composing of the user-defined complex types. Such graphical user interface elements may offer an intuitive interface to a user for defining even complex structures. Moreover, the graphical user interface elements may be adapted during the defining process to the respective necessary needs which is especially of interest for not advanced users. The number of dependencies and limitations may be presented to a user by the GUI such that passive knowledge may be sufficient for the defining method.

The graphical defining of the elements may be supported and/or guided and/or completed by offering a context menu containing menu item concerning obligatory or optional properties and/or information to be provided with the type defining form.

The operation S112 and the operation S114 may be based on similar graphical methods for supporting and/or guiding a user in order to present an adequate and simple way to define properties, settings or the like according to the respective operation.

In a further operation S115, the user-defined complex type may be displayed. The hierarchical structure of the user-defined complex type may be displayed. The displayed graphical depiction may allow the user to gain an overall view of the current defining condition to assess the complex type. A selection of information corresponding to each type element and an arrangement of the respective information according to the hierarchical structure and the properties of the type elements or graphical elements, respectively, may be presented to the user. It may also be possible to define a selection of information depicted by the graphical user interface. This may be of interest in combination with a high number of type elements and large complex hierarchical structure associated therewith.

The operation S115 may be continued with an operation S113 or an operation S116. The operational sequence may be continued with operation S116 in case of a completed complex type procedure or may be continued with operation S113 in case of adding further elements to the user-defined complex type. The branching of the operational sequence may be controlled by user input, i.e. the user may input a request indicating the completion of the operational process.

The operation S116 is analog to operation S103 depicted in Fig. 2a and described above. The completed user-defined complex type may be stored for example for later usage. The possibility of storing user-defined complex type may provide the possibility to a user to set up his own type library to be employed for different databases and/or to communicate complex types or such a library to another user and/or another system for employment or further processing.

The continuation with operation S113 may allow a user to define further elements of the complex type and composing thereto. Moreover, the user may allowed to modify previously defined elements of the complex type. The modifying may comprise a modifying of element properties, settings or the like. The modification of properties of an element may concern the modification of data type, data type properties or structural properties of the element according to the arrangement within the complex type, i.e. for example arrangement or placing within the hierarchical structure of the complex type, respectively. A data type may be a property according to the type of data which may be defined by the element type to enable a storing of respective data or information, respectively. Moreover, a data type may also be a property according the storage area to be reserved for containing data or information, respectively. Moreover, the modifying may also comprise a removing of an element from the complex type.

In a further operation S118, the user-defined complex type may be completed and the user may indicate to the graphical user interface (GUI) to end the process of graphically defining. The concluding implementing of the user-defined complex type may be a passing over of the definition of the complex type to a further application, a storing such as described in operation S155 or an applying of the complex type to a database.

The user-defined complex type may be passed over to further software tools such as a software tool for defining and generating tables of databases. In that case, the user-defined complex type may be used directly for defining the type of a column of a table. Moreover, the graphical user interface for graphically defining types may be started from such a software tool for defining table structures providing a preferable combination of software tools for the user to define types and table structure in a fast, intuitive and adequate way.

The user-defined complex type may be applied to a database in order to define a part of a table of the database. The part of a table may be a column of the table or several columns thereof. The applying may involve a defining of a new column of a table or the altering of a one or several columns of the table according to the definition of the user-defined complex type. The defining may be a defining of one or several columns, whereas the altering may modify or replace an existing definition of one or several columns of the table using the new user-defined complex type definition.

In an further operation S117, the resulting complex type may be implemented. The implementation operation S117 is analog to the operation S104 aforementioned with reference to Fig. 2a.

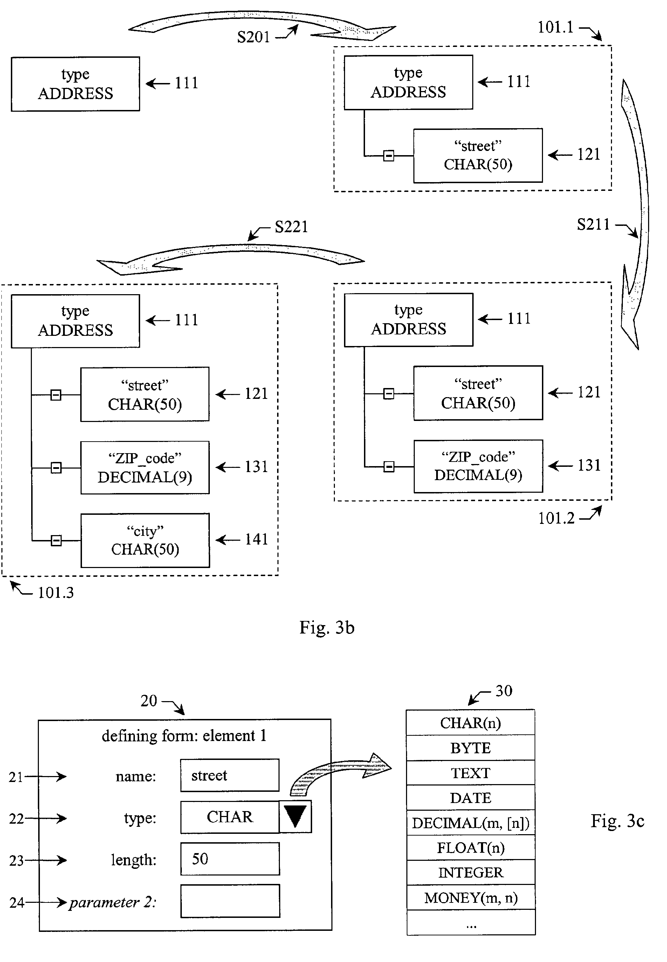

It may be noted that the described sub-operations of the operation S101 may performed parallel or in another sequence as presented in Fig. 2b. It may be possible that in a first sub-operation a user may request to define a new element type. A graphical form may be presented to the user on this request. The form may provide the possibility to define the internal element type and further obligatory and/or optional parameters or settings, respectively. On finishing of the form a respective type element may be generated employing the information filled in the graphical form by the user. A corresponding form for defining type elements is exemplary described below in the Fig. 3c. Further graphical guided methods and operational sequences for defining the type element may be possible and lead to the same type element since the information which have to be defined by the user is defined by the database.

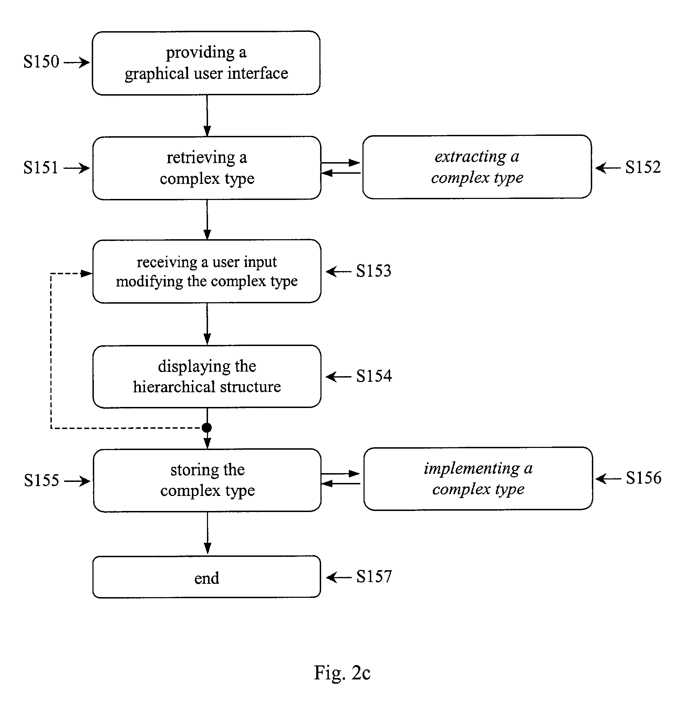

The following flow charts may present a sequence of operations according to an embodiment of the method for retrieving and modifying a complex type. The sequence of operations differs to the above presented sequence of operations according to an embodiment of the method for defining a complex type by the fact that a complex type may be available and the available complex type may have to be adapted to modified requirement or a new different complex type may be based on this available complex type. Therefore, operations of the following sequence of operations may be similar to the operations presented and described in Fig. 2a and Fig. 2b. Analog operations may be recognized by those skilled in the art. The description of operations given with reference to Fig. 2a and Fig. 2b and comparable or similar to those shown in Fig. 2c may be correspondingly valid for descriptions of operations given with reference to Fig. 2c or vice versa, respectively. Hence, references will be made to the operations of Fig. 2a and Fig. 2b.

Fig. 2c shows a flow chart illustrating a sequence of operations according to another embodiment of the method for retrieving and modifying a complex type with respect to the present invention. The graphical modifying of a complex type may be related to the graphical defining of a complex type according to embodiments of the invention. The graphical defining of a complex type may offer the possibilities to a user to defining, add and remove type elements of the complex type or properties/settings of the type elements, respectively. These processing operations may be also realized for graphically modifying a complex type with respect to an embodiment of the invention. The following flow chart may offer a possible sequence to the operations.

In an operation S150, a graphical user interface (GUI) may be presented to a user analog to operation S100 depicted in Fig. 2a and operation S110 depicted in Fig. 2b. The graphical user interface may be adapted for graphically defining complex and structured type for databases, respectively, particularly relational databases and more particularly SQL databases.

In a further operation S151, the complex type may be retrieved for modification. The retrieving may be a retrieving of a previously stored complex type according to operation S103 illustrated in Fig. 2a or S116 illustrated in Fig. 2b. Moreover, the complex type may be retrieved from a database. The complex type may have been applied before to the database.

In a further operation S152, the retrieving of the complex type may involve an extracting of the complex type. The complex type may be extracted from a table, wherein the complex type may define the properties of a column or several columns of a table.

In a further operation S153, the complex type may be modified by user input and a corresponding graphical modification may be received.. The modification of the complex type may comprise a modification of the designation, properties and/or settings of the complex type itself. The modification of the complex type may comprise a modification of one or several type elements or graphical elements of the complex type, wherein the modification may comprise a modification of the designation, properties and/or settings of the type elements.

The modifying may comprise a modifying of element properties, settings or the like. The modification of properties of an element may concern the modification of data type, data type properties or structural properties of the element according to the arrangement within the complex type, i.e. for example arrangement or placing within the hierarchical structure of the complex type, respectively. A data type may be a property according to the type of data which may be defined by the element type to enable a storing of respective data or information, respectively. Moreover, a data type may also be a property according the storage area to be reserved for containing data or information, respectively. Moreover, the modifying may also comprise a removing of an element from the complex type.

The graphical modifying may be performed by user input. The user input may be guided and performed by adequate design and configuration of the graphical user interface (GUI). Graphical elements of the graphical user interface (GUI), such as menus, assisting graphical forms and the like may guide the modifying and composing of the complex type and type elements thereof. Such graphical user interface elements may offer an intuitive interface to a user for modifying even complex structures and complex hierarchies thereof. Moreover, the graphical user interface elements may be adapted during the modifying process to the respective necessary needs which is especially of interest for not advanced users. The number of dependencies and limitations may be presented to a user by the GUI such that passive knowledge may be sufficient for the modifying method.

The graphical modifying of the elements may be supported and/or guided and/or completed by offering a context menu containing menu item concerning obligatory or optional properties and/or information to be provided with the type modifying form. The supporting and/or guiding of the user utilizing menus, forms or graphical items may be performed analog to the operations S112 and S114 described in Fig. 2b.

The modifying of a complex type may also involve an adding operation of new type elements to the complex type. An adding operation may be performed analog to the defining operation described in Fig. 2a and Fig. 2b.

In a further operation S154, the complex type may be displayed. The hierarchical structure of the complex type may be displayed. The displayed graphical depiction may allow the user to gain an overall view of the current defining and modifying condition to assess the complex type. A selection of information corresponding to each type element and an arrangement of the respective information according to the hierarchical structure and the properties of the type elements or graphical elements, respectively, may be presented to the user. It may also be possible to define a selection of information depicted by the graphical user interface. This may be of interest in combination with a high number of type elements and large complex hierarchical structure associated therewith.

The operation S154 may be continued with an operation S153 or an operation S155. The operational sequence may be continued with operation S155 in case of a completed complex type modifying procedure or may be continued with operation S153 in case of modifying further elements to the user-defined complex type. The branching of the operational sequence may be controlled by user input, i.e. the user may input a request indicating the completion of the operational process.

The operation S155 may be operated in combination with an operation S156 analog to operation S104 depicted in Fig. 2a and operation S117 depicted in Fig. 2b described above.

In the operation S155, the completed user-defined complex type may be stored for example for later usage. The operation S155 is operated analogously to operation S103 referenced in Fig. 2a or operation S116 referenced in Fig. 2b. The possibility of storing user-defined complex type may provide the possibility to a user to set up his own type library to be employed for different databases and/or to communicate types or such a library to another user and/or another system for employment or further processing.

The continuation with operation S153 may allow a user to modify further elements of the complex type. The modifying may comprise a modifying of element properties, settings or the like. The modification of properties of an element may concern the modification of data type, data type properties or structural properties of the element according to the arrangement within the complex type, i.e. for example arrangement or placing within the hierarchical structure of the complex type, respectively. A data type may be a property according to the type of data which may be defined by the element type to enable a storing of respective data or information, respectively. Moreover, a data type may also be a property according the storage area to be reserved for containing data or information, respectively. Moreover, the modifying may also comprise a removing of an element from the complex type.

In the operation S156, the completed user-defined complex type may be implemented. The operation S156 is operated analogously to operation S104 referenced in Fig. 2a or operation S117 referenced in Fig. 2b.

In a further operation S157, the user-defined complex type may be completed and the user may indicate to the graphical user interface (GUT) to end the process of graphically modifying. The concluding implementing of the user-defined complex type may be a passing over of the definition of the complex type to a further application, a storing such as described in operation S155 or an applying of the complex type to a database.

The user-defined complex type may be passed over to further software tools such as a software tool for defining and generating tables of databases. In that case, the user-defined complex type may be used directly for defining the type of a column of a table. Moreover, the graphical user interface for graphically modifying types may be started from such a software tool for defining table structures providing a preferable combination of software tools for the user to define types and table structure in a fast, intuitive and adequate way.

The user-defined complex type may be applied to a database in order to define a part of a table of the database. The part of a table may be a column of the table or several columns thereof. The applying may involve a defining of a new column of a table or the altering of a one or several columns of the table according to the definition of the user-defined complex type. The defining may be a defining of one or several columns, whereas the altering may modify or replace an existing definition of one or several columns of the table using the new user-defined complex type definition.

It may be noted that the method for defining a complex type and the method for retrieving and modifying a complex type, both with respect to respective embodiments of the invention, may be combined to a composed method enabling the carrying out of both methods according to the need of a user. Both methods according to embodiments of the invention may be based on the same graphical illustrative depiction of a complex type, hence, the graphically defining and graphically modifying may be based on a common graphical editor, allowing to execute the defining and modifying operations like described above. Since the defining operation of a complex type may also offer a modifying operation of type elements to the a and the modifying operation of a complex type may also offer a defining operation of type elements to a user the combining of both methods may offer a preferable and adequate method to the user according to an embodiment of the present invention.

The following exemplary complex types may illustrate a possible hierarchical depiction of the complex type. The depiction shall offer an assessable structure in order to support and guide a user controlling the type. Additionally, a sequence of defining operations or modifying operations may be presented with respect to several exemplary complex types, respectively.

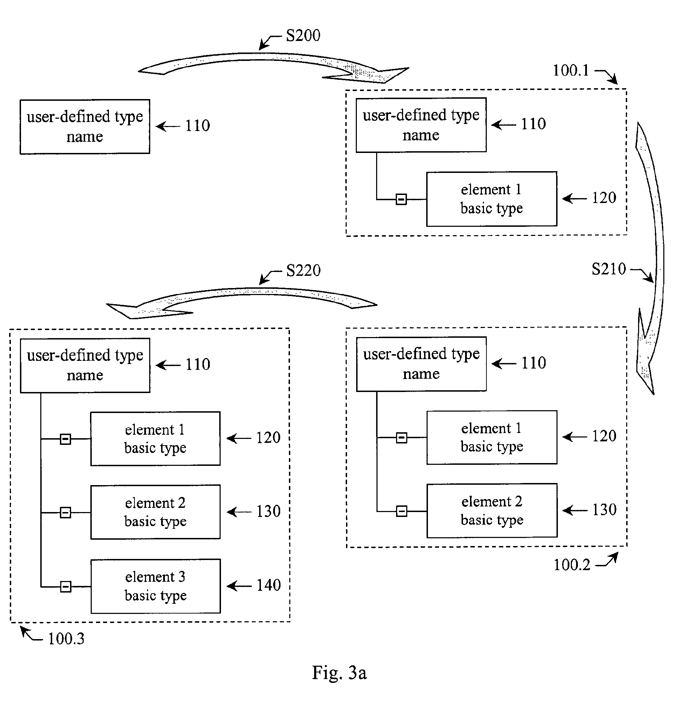

Fig. 3a shows a flow chart illustrating a sequence of operations according to an embodiment of the method for defining a complex type.

The graphical defining of a user-defined complex type may be initiated by presenting a graphical element or graphical form to the user for setting initial definitions. Herein, a root element 110 representing the user-defined complex type may be shown offering the possibility to a user to define and input a name or designation of the user-defined complex type, respectively. This root element 110 may represent a hierarchical root element according to which the hierarchical structure of the user-defined complex type may be set up.

In an operation S200, the type element may be added to the user-defined complex type. A user instructs the graphical user interface to add a distinct kind of type element to the type. Available type elements may be presented to the user by a graphical menu. The type element 120 represents a possible graphical depiction of such a type element. Basically, the type element 120 may be identified by a name or designation, herein "element 1", and an element type, herein an arbitrary "basic type" which may be provided by the database.

The illustration 100.1 shows a possible depiction of the root element 110 representing the complex type and its first type element 120 added by operation S200. The connecting line may indicate the hierarchical arrangement of the element type 120 within the user-defined complex type represented by the root element 110.

In an operation S210, a further type element may be added to the user-defined complex type. The operation may be carried out analog to operation S200.

The illustration 100.2 shows a possible depiction of the root element 110 representing the user-defined complex type and its first and second type elements 120 and 130 added by operations S200 and S210. The connecting lines indicate that the type elements 120 and 130 are arranged at the same hierarchical level with respect to the root element 110 representing the user-defined complex type.

In an operation S220, a further type element may be added to the user-defined complex type. The operation may be carried out analog to operation S200.

The illustration 100.3 shows a possible depiction of the root element 110 representing the user-defined complex type and its first second and third type elements 120, 130 and 140 added by operations S200, S210 and S220. The connecting lines indicate that the type elements 120, 130 and 140 are arranged at the same hierarchical level with respect to the root element 110 representing the user-defined complex type.

In Fig. 3a the user-defined complex type is based on basic non-hierarchical type elements. Therefore, the user-defined complex type has a hierarchical structure of only one level. Naturally, the type elements which may be comprised by a user-defined complex type are not limited to non-hierarchical type elements or basic type elements. The example presented in Fig. 3a has only be limited to basic element types to provide a first simple description of the method for graphical defining according to an embodiment of the invention. Further examples described below will present structures having several hierarchical levels.

The sequence of operations described with respect to Fig. 3a may be further explained in more detail in connection to a concrete example. The example is based on address wherein the address may consist of a street, a zip code and a city.

Fig. 3b shows a flow chart illustrating a sequence of operations according to an embodiment of the method for defining a complex type on the basis of an exemplary type "ADDRESS".

The definition of the user-defined complex type may be initiated by the defining of a root element 111 comprising a name or designation "ADDRESS".

In an operation S201, a first type element 121 may be graphically defined by a user. The defining may comprise a defining of an type element name or designation, respectively, the internal data type and obligatory and/or optional parameters or settings, respectively. The type element 121 may contain the name of a street according to the ADDRESS type. A street name consist usually of an alphanumeric symbol sequence including a house number. Therefore, a corresponding basic type may be selected by the user. Herein, the corresponding type may be designated by the type "CHAR", a dedicated type of a SQL database. Additionally, the number of allowed alphanumeric symbols may have to be defined by the user in order to reserve a corresponding storage area within the database or the table of a database, respectively. Herein, an entry of the "street" may contain 50 alphanumeric symbols.

The illustration 101.1 shows a possible depiction of the root element 111 and the type element 121 arranged corresponding to the hierarchical structure of the user-defined complex type. The graphical depiction of the type element 121 may comprise information on the name or designation, respectively, the internal data type and obligatory and/or optional parameters and settings, respectively.

In an operation S211, a second type element 131 may be graphically defined by a user. The defining may comprise a defining of an element type name or designation, respectively, the internal data type and obligatory and/or optional parameters or settings, respectively. The element type 131 may contain the ZIP code according to the ADDRESS type. A ZIP code consist usually of a numeric symbol sequence. Therefore, a corresponding basic type may be selected by the user. Herein, the corresponding basic type may be designated by the type "DECIMAL", a dedicated type of a SQL database. Additionally, the number of allowed numeric symbols may have to be defined by the user in order to reserve a corresponding storage area within the database or the table of a database, respectively. Herein, an entry of the "ZIP_code" may contain 9 numeric symbols.

The illustration 101.2 shows a possible depiction of the root element 111 and the type elements 121 and 131 arranged corresponding to the hierarchical structure of the user-defined complex type. The graphical depiction of the type elements 121 and 131 may comprise information on the name or designation, respectively, the internal data type and obligatory and/or optional parameters and settings, respectively.

In an operation S221, a third type element 141 may be graphically defined by a user. The defining may comprise a defining of an element type name or designation, respectively, the internal data type and obligatory and/or optional parameters or settings, respectively. The element type 141 may contain the name of a city according to the ADDRESS type. A name of a city consist usually of an alphanumeric symbol sequence. Therefore, a corresponding basic type may be selected by the user. Herein, the corresponding basic type may be designated by the type "CHAR", a dedicated type of a SQL database. Additionally, the number of allowed alphanumeric symbols may have to be defined by the user in order to reserve a corresponding storage area within the database or the table of a database, respectively. Herein, an entry of the "city" may contain 50 alphanumeric symbols.

The illustration 101.3 shows a possible depiction of the root element 111 and the type elements 121, 131 and 141 arranged corresponding to the hierarchical structure of the user-defined complex type. The graphical depiction of the types element 121, 131 and 141 may comprise information on the name or designation, respectively, the internal type and obligatory and/or optional parameters and settings, respectively.

The user-defined complex type may be used to generate automatically a respective SQL instruction set to be transmitted to a respective SQL database. The user-defined complex type "ADDRESS" may be denoted using SQL instructions like following:

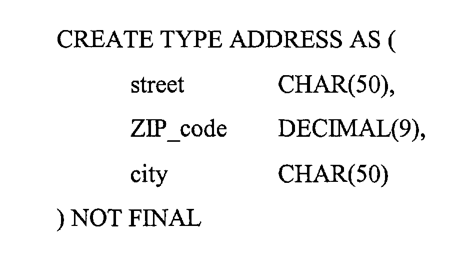

Like described above, the defining of the elements may be supported by offering a graphical form to a user. The form may offer the possibility to guide a user through the defining operation wherein the elements of the form may be adaptive to user selections and requests. The following description of such a graphical form may present one possible embodiment according to the present invention.

Fig. 3c depicts a graphical form for defining a type elements of a user-defined complex type according to the sequence of operations described in Fig. 3a and Fig. 3b.

The graphical form 20 may present inputting fields accepting user inputs and/or fields reactive on user requests. According to the description above of a type element, the graphical form 20 may represent input fields of obligatory and optional preferences, settings and properties, respectively. Herein, the graphical form may be described with respect to the type element defining in reference to operation S201 illustrated in Fig. 3b.

The type element may contain a name of a street and may be designated as "street" for further accesses to this type element. The designate may be defined by a user by inputting the designation into form field 21, designated as "name".

Further, the type may be defined as "CHAR". A corresponding form field 22 is presented in graphical form 20. The form field 22 may be a drop down menu. The drop down menu may offer a selection of type available for this type element. The user may select one of the menu offered item, herein the item "CHAR".

A possible non-complete list of items of a drop down menu according to form field 22 is presented by item list 30. The item list 30 may contain additional information to the list entries. Additional information may be information on obligatory and/or optional parameters which may have to be additionally defined by the user.

For example, the list entry "CHAR" contains additionally the information "(n)" indicating to the user that a parameter n has to be defined. This parameter represents the length of the "CHAR" type, i.e. the number of alphanumeric symbols which may be stored maximally.

Further another exemplary list entry may be the type "DECIMAL". The list entry "DECIMAL" contains additionally the information "(n, [m])" indicating to the user an obligatory parameter n and an optional parameter m. Usually, the first parameter n defines the maximal total numbers of digits which may be stored and the second parameter m defines the maximal numbers of decimal places regarding the maximal total numbers of digits.

Moreover, the selection of a list entry by the user may involve an automatically adaptation of the graphical form. According to form fields 23 and 24 corresponding field for user inputs may be adapted to the selection by e.g. displaying a respective understandable designation of the form fields or adding and/or disabling form field, respectively.

It can be understood that graphical user interfaces offer the possibility to guide a user through complex operations by adapting graphical user interface elements such as graphical forms upon certain user request expecting situations.

The graphical form may comprise additional field for defining of inputting obligatory or optional parameters. According to the selected type "CHAR" the number of alphanumeric symbols reserved by the database for storing may have to be defined. The respective form filed 23 may be designated "length". Herein, a user may input a length of 50 alphanumeric symbols according to operation S201.

The second parameter form field 24 may not be used according to the presented exemplary type element defining.

Further form field may be necessary in accordance to the obligatory and/or optional parameters, settings, preferences and further information which may have to or which may can selected or defined by the user in order to define the type of the element sufficiently or completely, respectively.

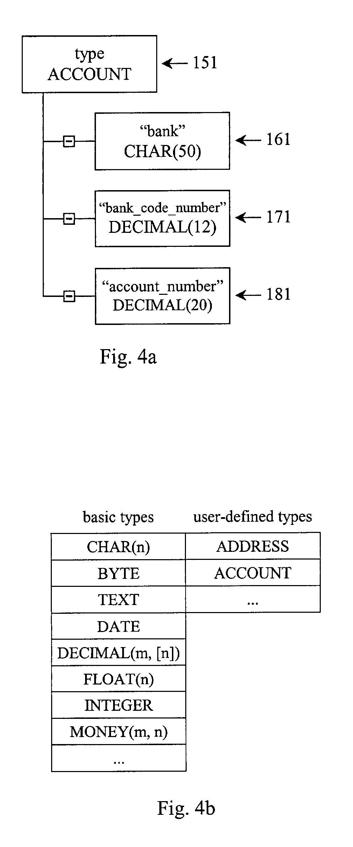

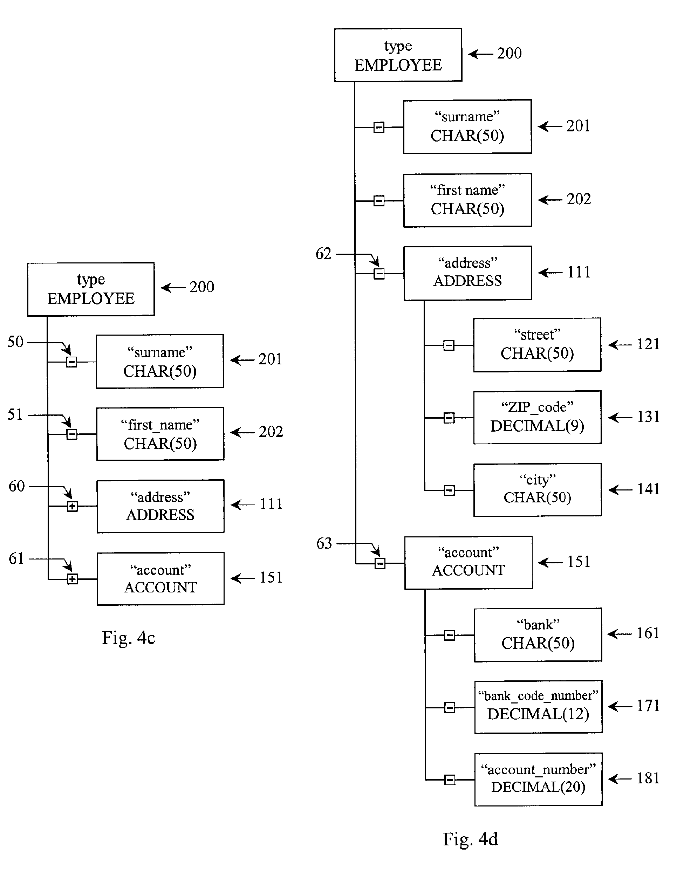

The figures 4a, 4b, 4c and 4d present a further example of a user-defined complex type.

Fig. 4a depicts a user-defined complex type "ACCOUNT". A further user-defined complex type is presented analog to Fig. 3b (illustration 101.3) in Fig. 4a. The complex type "ACCOUNT" may comprise a type element "bank" 161, a type element "bank_code_number" 171 and a type element "account_number" 181. The designation of the type elements are self explaining. Referring to SQL statements, the type element "bank" 161 may be a "CHAR" type with a maximal length of 50 alphanumeric symbols whereby the type elements "bank_code_number" 171 and "account_number" 181 may be DECIMAL types with a maximal number of 12 or 20 digits, respectively. The defining of this user-defined complex type "ACCOUNT" 151 may be performed analog to the describe sequence of operations according to Fig. 3b. Therefore, regarding the following description it may be assumed that the user-defined complex type "ACCOUNT" 151 has been defined and stored for further utilizing and processing.

The user-defined complex type may be used to generate automatically a respective SQL instruction set to be transmitted to a respective SQL database. The user-defined complex type "ACCOUNT" may be denoted using SQL instructions like following:

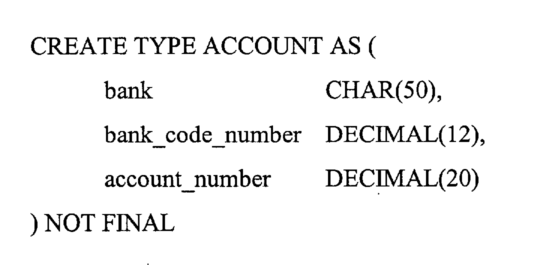

Analog to the user-defined complex type "ACCOUNT" it may be also assumed that the user-defined complex type "ADDRESS" has been also defined and stored for further utilizing and processing.

Defined and stored complex type may be treated in the same way like described regarding to basic types in Fig. 3c according to a defining of the type of an element type during the defining of the user-defined complex type. Thus, the user-defined complex types "ADDRESS" and "ACCOUNT" may be included in a further user-defined complex type.

Fig. 4b depicts a context menu according to the type element defining illustrated in and with respect to Fig. 3c.

In reference to Fig. 3c, a graphical form may be provided to a user for inputting and/or selecting settings, parameters and/or preferences of the type elements. According to the above assumption that user-defined complex types "ADDRESS" and "ACCOUNT" may be provided a respective type menu for selecting the internal data type of a type element may comprise also these types "ADDRESS" and "ACCOUNT". A corresponding menu may be provided in Fig. 4c. The menu may comprise basic database provided data types and user-defined complex types. The user-defined complex types may be stored to be accessible by the graphical user interface (GUI) according to the method for graphical defining a user-defined complex type.

The user of the graphical user interface (GUI) may be allowed to add the user-defined complex types to a respective menu. Therefore, the item list 30 shown in Fig. 3c may be extended to the item list shown in Fig. 4c.

Further adding of types to a respective list entries of the menu list may be unlimited. The managing of such an item list for selecting may enable a user to keep ready a personal selection of types and may for example simplify and fasten a set up of a new modified, or adapted database based on personal complex types. Otherwise, the personal complex types may have to be inputted repeatedly always time after time.

Fig. 4c shows an exemplary type "EMPLOYEE" on the basis of complex types "ADDRESS" (Fig. 4a) and "ACCOUNT" (Fig. 4b) in a first depiction.

Analog to the operational sequences shown and described in Fig. 3a and Fig. 3b, an exemplary user-defined complex type "EMPLOYEE" 200 may be composed by a user. The user-types "ADDRESS" and "ACCOUNT" may be available during the composing process of the user-defined complex type "EMPLOYEE" 200 for including therein. The type "EMPLOYEE" 200 may comprise a type element "surname" 201, a type element "first_name" 202, a type element "address" 111 and a type element "account" 151.

The type element "surname" 201 may contain the surname of an employee so that the internal type of this element may be a SQL-database provided "CHAR" type of a maximal length of 50 alphanumeric symbols.

The type element "first_name" 202 may contain the first name of an employee so that the internal type of this element may be a SQL-database provided "CHAR" type of a maximal length of 50 alphanumeric symbols.

The structure and components of the user-defined complex type "ADDRESS" is described in Fig. 3b whereby the structure and components of the user-defined complex type "ACCOUNT" is described in Fig. 4a.

The hierarchical arrangement of the elements of the user-defined complex type "EMPLOYEE" 200 in reference to the root element is depicted in Fig. 4c. The four type elements "surname" 201, "first_name" 202, "address" 111 and "account" 151 may be arranged within the same hierarchical level.

The user-defined complex type may be used to generate automatically a respective SQL instruction set to be transmitted to a respective SQL database. The user-defined complex type "EMPLOYEE" may be denoted using SQL instructions like following:

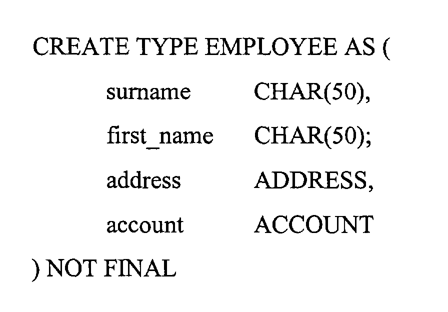

The "minus" symbol 50 depicted in the connecting line of the root element of user-defined complex type "EMPLOYEE" and the element type "surname" may indicate that the type element "surname" 201 is a basic type element which does not comprise further hierarchical structure.

The same applies to the type element "first_name" 202. A "minus" symbol 51 indicates that the type element "first_name" 202 comprises no further hierarchical structure or levels, respectively.

A "plus" symbol 60 may indicate in contrast to the "minus" symbols 50 and 51 that further hierarchical levels are comprised by the type element "address" 111. Analog a "plus" symbol 61 may also indicate that further hierarchical levels are comprised by the type element "account" 151. According to the user-defined complex types "ADDRESS" and "ACCOUNT", respectively, both the user-defined complex type "ADDRESS" and "ACCOUNT" comprise one further hierarchical level.

A selective depiction of hierarchical levels of user-defined complex types according to a realization described herein may improve the overview, especially in more complex cases comprising several hierarchical levels, i.e. a complex hierarchical structure.

Fig. 4d shows an exemplary complex type "EMPLOYEE" on the basis of complex types "ADDRESS" (Fig. 4a) and "ACCOUNT" (Fig. 4b) in a second depiction.

The reduced depiction of the hierarchical structure of the complex type "EMPLOYEE" may provide an overview. The displaying depth of the hierarchical levels may be controlled by user input, for example by selecting the symbols 50, 51 or 60, 61, respectively. Fig. 4d shows the user-defined complex type "EMPLOYEE" in a complete depiction showing the total hierarchical structure of the user-defined complex type. The "plus" symbols 60 and 61 may be replaced by the "minus" symbols 62 and 63. The "minus" symbols may indicate that the respective one level lower hierarchical structure is displayed.

Accordingly, the type elements 121, 131 and 141 may be displayed on selecting the "plus" symbol 60 by a user, exchanging additionally the "plus" symbol 60 against a "minus" symbol 62 within the depiction. Moreover, the type elements 161, 171 and 181 may be displayed on selecting the "plus" symbol 60 by a user, exchanging the "plus" symbol 61 against a "minus" symbol 63. The individual selecting of the symbols 60 and 61 to control the displaying of hierarchical structures may also allow a user to select a displaying of the hierarchical structure of type element "address" 111 whereby the hierarchical structure of type element "account" 151 may be not displayed and vice versa, respectively.

A further example may illustrate a user-defined complex type comprising 3 hierarchical levels in contrast to the above described exemplary user-defined complex types each comprising 2 hierarchical levels. The more hierarchical levels the more advantageous may be a controllable displaying of the included hierarchical levels or structure, respectively, in order to put a user in a position to overview a user-defined complex type.

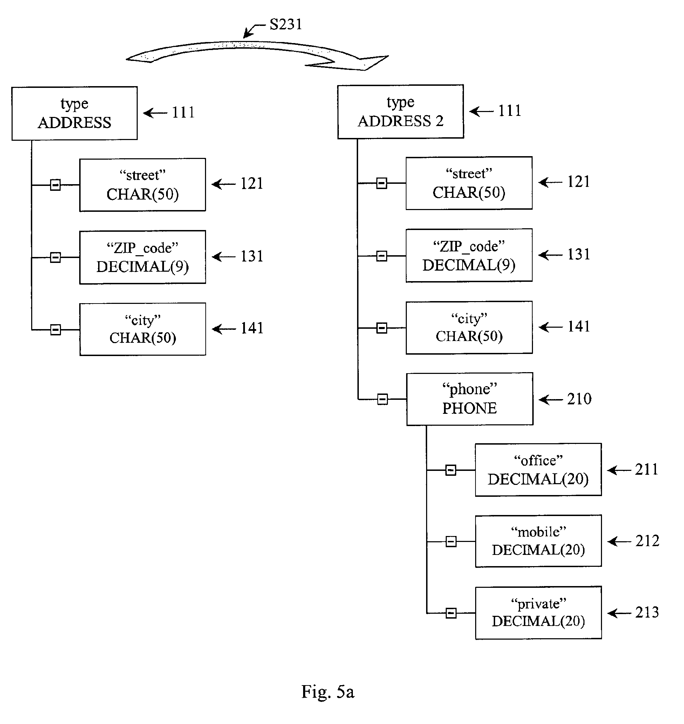

Fig. 5a shows an exemplary complex type "ADDRESS_2" on the basis of complex type "ADDRESS" (Fig. 3b). The user-defined complex type "ADDRESS_2" may be derived from the above described complex type "ADDRESS". The graphical user interface according to an embodiment of the invention for defining a complex type may offer the possibility to modify previously defined complex types to adapt this previously defined complex types to for example changing conditions.

The user-defined complex type "ADDRESS" may have to be expanded in order to comprise type elements defining data types according to telephone numbers, for example one office telephone number, one mobile phone number and one private telephone number. An internal type SQL "DECIMAL" of length 20 may be suitable for each telephone number element.

The graphical user interface may display the user-defined complex type "ADDRESS" and offer the user modification operations to modify the structure of the user-defined complex type "ADDRESS".

In an operation S231, the user may select an adding operation in order to expand the user-defined complex type "ADDRESS" by telephone number elements. The telephone numbers may be arranged within a structured type. Therefore, the user may have to define the a respective sub-structure designated as complex type "PHONE" before or subsequently. The subsequent defining of the complex sub-structure type "PHONE" may be performed analog to the defining procedure described above with reference to Fig. 3a and Fig. 3b.

The resulting complex type "ADDRESS_2" comprises the above described elements of the original complex type "ADDRESS" including type element "street" 121, type element "ZIP_code" 131 and type element "city" 141 and a complex type "PHONE" as a further element regarding the complex type "ADDRESS_2", wherein the complex type "PHONE" comprises type element "office" 211, type element "mobile" 212 and type element "private" 213. The respective hierarchical structure of the resulting complex type "ADDRESS_2" can be seen in Fig. 5a.

The user-defined complex type "PHONE" may be denoted using SQL instructions like following:

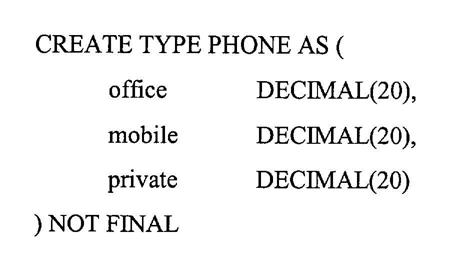

The user-defined complex type "ADDRESS_2" may be used to generate automatically a respective SQL instruction set to be transmitted to a respective SQL database. The user-defined complex type "ADDRESS_2" may be denoted using SQL instructions like following:

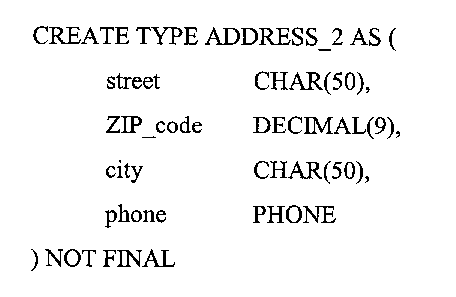

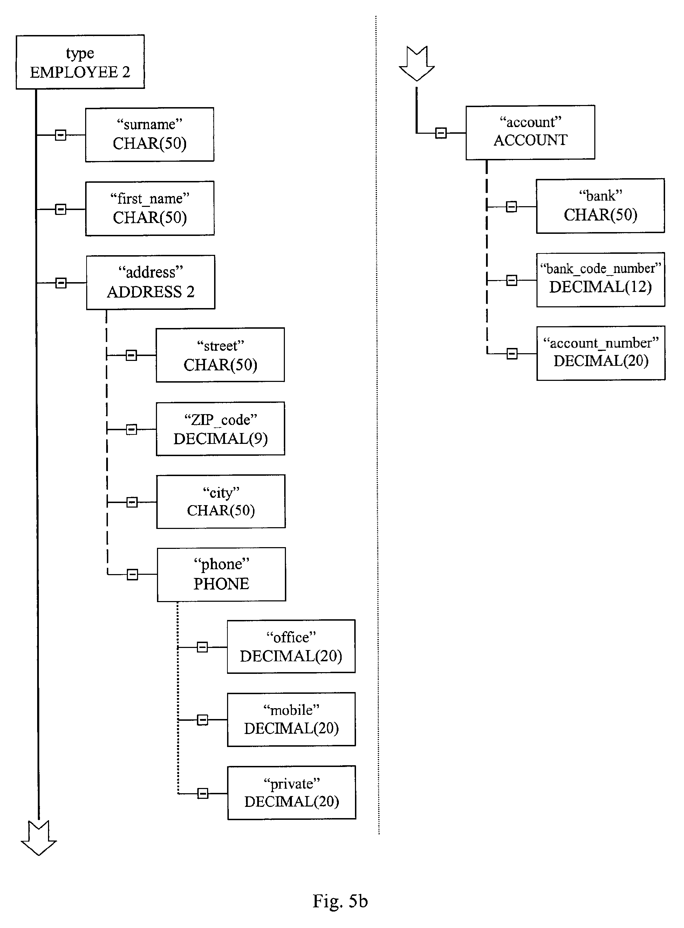

Fig. 5b shows an exemplary complex type "EMPLOYEE_2" on the basis of complex types "ADDRESS_2" (Fig. 5a) and "ACCOUNT" (Fig. 4a). The exemplary complex type "EMPLOYEE_2" is derived from the complex type "EMPLOYEE" which means that the complex type "EMPLOYEE_2" comprises analog a type element "surname", a type element "first_name", a type element "address" and a type element "account". The both first type elements "surname" and "first_name" may be based on basic database provided types whereby the type element "account" maybe based on the complex type "ACCOUNT" which is described above in detail with reference to Fig. 4a. In contrast to the complex type "EMPLOYEE" the type element "address" of complex type "EMPLOYEE_2" may be based on the complex type "ADDRESS_2" described in detail with reference to Fig. 5a.

The resulting complex type "EMPLOYEE_2" comprises three hierarchical levels. Fig. 5b shows the complete hierarchical structure of the complex type "EMPLOYEE_2". The first or root hierarchical level may be identified by the vertical continuos line, the second hierarchical level may be identified by the vertical dashed line whereby the third hierarchical level may be identified by the dotted continuos line.

The user-defined complex type "EMPLOYEE_2" may be used to generate automatically a respective SQL instruction set to be transmitted to a respective SQL database. The user-defined complex type "EMPLOYEE_2" may be denoted using SQL instructions like following:

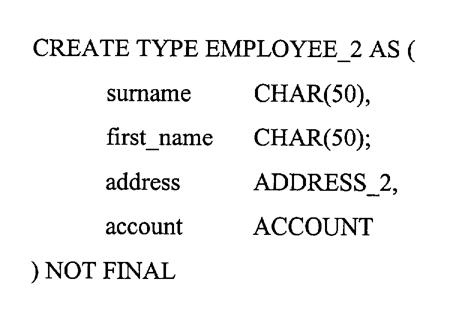

The following figure may present a timely sequence of operations performed by a user and a graphical user interface operating the method according to an embodiment of the present invention.

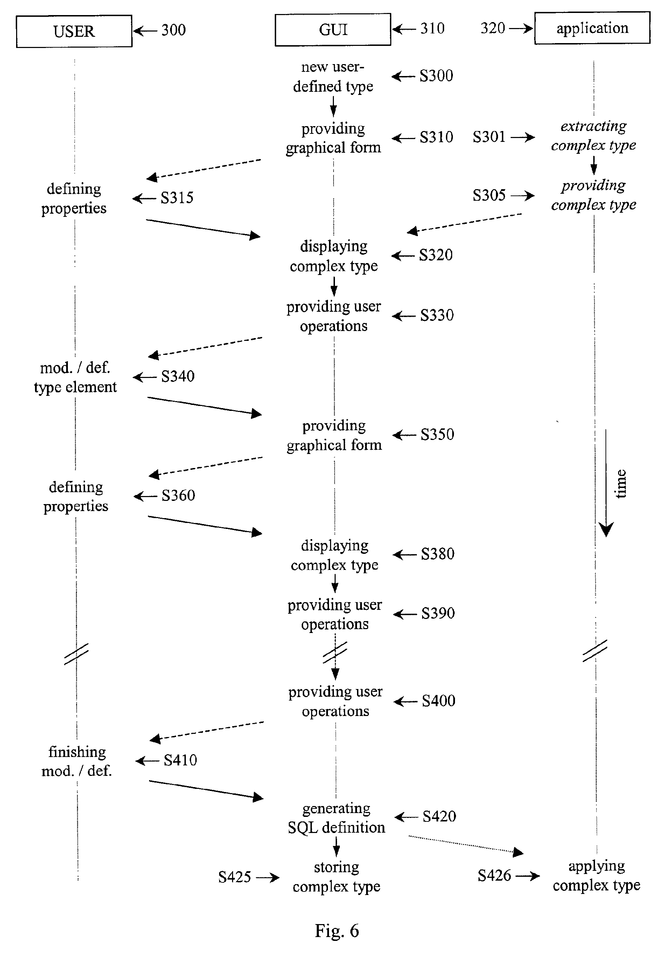

Fig. 6 shows a flow diagram of the interacting of a user, a graphical user interface (GUI) according to an embodiment of the invention and a database. The diagram illustrates the timely sequence of operations wherein the different operations are assigned to the user 300 and the graphical user interface (GUI) 310 which enables the operation of the method according to an embodiment of the present invention. A further application 320 may involved into the timely sequence.

The respective operations are described in detail above.

In an operation S300, the graphical defining of a new user-defined complex type may be initiated. The graphical user interface 310 may provide a corresponding look.

In a further operation S310, a graphical form may be presented by the graphical user interface 310 to the user 300. The form may provide inputting fields, menus and/or context menus for inputting or selecting of properties and settings of the complex type. The graphical form and/or the menus may be adaptive to the user inputs, properties or settings.

In a further operation S315, the user 300 may input and/or select the properties and/or setting according to the presented graphical input form.

In a further operation S320, the graphical user interface (GUI) 310 may present a corresponding graphical element depicting the complex type and the inputted and selected properties and/or settings by the user in operation S315. The presented graphical element may be a root element according to which the type elements may be depicted in order to depict the hierarchical structure of the complex type.

In a further operation S330, operations may be provided to the user. The provided operations may be operations controlling the defining of the complex type. The provided operations may be an adding operation indicating that a type element may be added to the complex type. Further, the provided operations may also be a modifying operation indicating that a type element may be modified, for example properties of a type element may be modified or a placing of the type element within the hierarchical structure may be modified. The provided operations may also be a removing operation of a type element.

In a further operation S340, the user 300 may select a provided operation for controlling the operation of the graphical user interface (GUI) 310 instructing the graphical user interface (GUI) 310 to add a further graphical element.

In a further operation S350, the graphical user interface (GUI) 310 may provide a graphical form allowing a user 300 to define the properties and/or settings of a new graphical element or type element, respectively. The graphical form and/or the menus may be adaptive to the user inputs, properties or settings.

In a further operation S360, the user 300 may input and/or select the properties and/or setting according to the presented graphical input form.

In a further operation S380, the complex type may be displayed. The displaying of the complex type may comprise for example a displaying of a graphical root element according to the complex type and the corresponding inputted and/or selected properties/settings thereof and a displaying of graphical elements according to the type elements of the complex type and the corresponding inputted and/or selected properties/settings thereof.

In a further operation S390, operations may be provided to the user. This operation may be analog to operation S330 and a selecting/inputting of an operation by the user be lead to the performing of operations according to operations S340 to S380. The procedure of the operations S340 to S380 may be repeated until the complex type is finished.

In a further operation S400, operations may be provided to the user. This operation may be analog to operation S330 or operation S390.

In a further operation S410, the user 300 may select a provided operation initiating the finishing of the complex type.

In a further operation S420, the graphical user interface (GUI) may initiate a generation of a structured query language (SQL) statement according to the graphically defined complex type.

In a further operation S426, the complex type may be stored for further or later usage.

In a further operation S426, the complex type may be applied to an application 320. The application 320 may be a database and the complex type may be applied to a table of the database defining a type of a column for storing respective data therein.

Instead of starting a graphical defining procedure according to operation S300, the presented sequence may be started with operation S301.

In an operation S301, a complex type may be extracted. The complex type may be extracted from a database, particularly from a table of a database and more particularly from a column of a table of a database. Moreover, the complex type may be extracted from several columns of a table of a database.

In a further operation S305, the complex type may be provided to the graphical user interface (GUI) 310. The graphical user interface (GUI) 310 may retrieve the provided complex type from the application 320, wherein the application may be a database.

The sequence of operations may be continued with operation S320, displaying the complex type which is described in detail above. The following operations may allow a user 300 to modify the retrieved complex type. The modifying may comprise a modifying of the elements of the complex type, of properties of the elements. Moreover, the modifying may comprise a removing of elements, a replacing of elements within the hierarchical structure of the complex type and/or an adding of additional elements to the complex type. The further operations may be performed analog to the defining procedure of a complex type.

Fig. 7a illustrates an apparatus according to an embodiment of the method for defining a complex type of the present invention. The apparatus 700 may comprise components allowing to carry out the operational sequences according to the above described method for defining a complex type.

The apparatus 700 may comprise an editor for graphically defining a complex type. The editor 701 may comprise further components for operating the corresponding aforementioned method for graphically defining a complex type, a component for providing a graphical user interface (GUI) 702 to a user of the apparatus 700 and a component for receiving 703 a graphical definition of the complex type graphically defined by the utilization of the editor 701. Further, the apparatus 700 comprises also a display 705 for displaying the complex type or the hierarchical structure of the complex type represented by graphical elements and a component for storing 706 of the resulting complex type.

The editor 701 may offer the functionality of the component for providing a graphical user interface (GUI) 702 itself which means, that the editor 701 is an editor bases on a graphical user interface (GUI) and provides graphical elements of the kind presented above and employed for the method for graphically defining according to an embodiment of the present invention. The defining of the graphical elements of the editor 701 may be based on a programming or scripting language such as a WEB browser. User interaction with such an editor may lead to the definition of the complex type which may be displayed subsequently.

The component for providing a graphical user interface (GUI) 702 or the editor may additionally comprise components for providing graphical forms 711 and/or components for providing graphical menus 712. These components for providing 711 and 712 may operate in combination with the editor or the component for providing a graphical user interface (GUI) 701, respectively, whereby these components for providing 711 and 712 may be operated by the help of a programming interface offering basic methods for generating forms and/or menus.

The component for storing 706 may comprise access to an appropriate interface which may be necessary for accessing certain desired storage media. The interface may allow to store the complex type, a definition of the complex type, a coding sequence of the complex type of the like in a random access memory or on a readable storage medium. The storage media may be accessible by a processing device. The interface may also allow to use a database for storing the complex type for example by providing access to a database management system.

Further, the apparatus 700 may comprise a component for implementing 713 a complex type. The implementation of a complex type may be a handing over of an appropriate definition of the resulting complex type to further processing operations.

Further, the apparatus 700 may also comprise a component for applying 714 a complex type upon a database. The complex type may be applied to an existing database in order to define a new table, part of a table or several tables or to alter a current definition thereof. The applying of a complex type may need an appropriate and adapted interface to access the database or a database management system of the database.

Moreover, the apparatus 700 may comprise a component for generating 715 an SQL statement in accordance to the defined complex type.

The components of the apparatus 700 may be constituted by a dedicated data processing device or by a code section executed at a processing device. The components of the apparatus 700 may be realized by an executable script or a program section executed at a processing device. The aforementioned components of the apparatus 700 may be adapted to the corresponding operations presented in combination with the method for graphically defining a complex type according to an embodiment with respect to the invention.

Fig. 7b illustrates an apparatus according to an embodiment of the method for retrieving and modifying a complex type of the present invention. The apparatus 800 may comprise components allowing to carry out the operational sequences according to the above described method for retrieving and modifying a complex type.

The apparatus 800 may comprise an editor for graphically defining a complex type. The editor 801 may comprise further components for operating the corresponding aforementioned method for graphically modifying a complex type, a component for providing a graphical user interface (GUI) 802 to a user of the apparatus 800 and a component for receiving 803 a graphical definition of the complex type graphically modifying by the utilization of the editor 801. Further, the apparatus 800 comprises also a component for retrieving 804 a complex type, a display 805 for displaying the complex type or the hierarchical structure of the complex type represented by graphical elements and a component for storing 806 of the resulting complex type.

The editor 801 may offer the functionality of the component for providing a graphical user interface (GUI) 802 itself which means, that the editor 801 is an editor bases on a graphical user interface (GUI) and provides graphical elements of the kind presented above and employed for the method for graphically modifying according to an embodiment of the present invention. The modifying of the graphical elements of the editor 801 may be based on a programming or scripting language such as a WEB browser. User interaction with such an editor may lead to the modification of the complex type which may be displayed subsequently.

The component for providing a graphical user interface (GUI) 802 or the editor may additionally comprise components for providing graphical forms 811 and/or components for providing graphical menus 8012. These components for providing 811 and 812 may operate in combination with the editor or the component for providing a graphical user interface (GUI) 801, respectively, whereby these components for providing 811 and 812 may be operated by the help of a programming interface offering basic methods for generating forms and/or menus.

The component for retrieving 804 may comprise access to an appropriate interface which may be necessary for accessing certain desired storage media storing the complex type to be retrieved. The interface may allow to retrieve or read the complex type, a definition of the complex type, a coding sequence of the complex type of the like in a random access memory or on a readable storage medium. The storage media may be accessible by a processing device. The interface may also allow to use a database for retrieving the complex type for example by providing access to a database management system.

The component for storing 805 may comprise access to an appropriate interface which may be necessary for accessing certain desired storage media. The interface may be similar to that described in accordance with the component for retrieving 804 of a complex type but may offer writing functionality instead reading or receiving functionality, respectively.

Further, the apparatus 800 may comprise a component for extracting 810 of a complex type. The complex type definition may be extracted for a database where the complex type is employed. An appropriate interface may offer the access to the database in order to extract the complex type. The extracting of the complex type may require an interpreting of the extracted complex type comprising a recoding of the extracted information translating into information which may be processed by apparatus 800.

Further, the apparatus 800 may also comprise a component for implementing 813 a complex type. The implementation of a complex type may be a handing over of an appropriate definition of the resulting complex type to further processing operations.

Further, the apparatus 800 may also comprise a component for applying 814 the complex type upon a database. The complex type may be applied to an existing database in order to define a new table, part of a table or several tables or to alter a current definition thereof. The applying of a complex type may need an appropriate and adapted interface to access the database or a database management system of the database.

Moreover, the apparatus 800 may comprise a component for generating 815 an SQL statement in accordance to the defined complex type.

The components of the apparatus 800 may be constituted by a dedicated data processing device or by a code section executed at a processing device. The components of the apparatus 800 may be realized by an executable script or a program section executed at a processing device. The aforementioned components of the apparatus 800 may be adapted to the corresponding operations presented in combination with the method for graphically defining a complex type according to an embodiment with respect to the invention.

The embodiments according to the method for defining a complex type and the method for retrieving and modifying a complex type of the present invention may be operated in a standard environment of database management systems. The following figures may present such standard environments of database management systems and accessing applications.

Fig. 8a illustrates an arrangement of a database management system (DBMS) and an application processing and graphical user interface (GUI) displaying device.

A database management system 600 and a processing device 500 may be provided. The database management system comprises at least one relational database. The database management system 600 may be a relational database management system. The database management system may be connected to the processing device 500 via a network 400. The network 400 may be a local area network, a wide area network or any other network enabling the communication of a database management system instruction protocol. The network 400 may be an interconnected network comprising several network. A so called gateway may connect different digital communication networks and may enable a communication between devises connected to different networks via a gateway connected to each of the different networks. Moreover, the network 400 may also a wireless network, such as a wireless local area network or a Bluetooth network. Further, the network may comprise additionally telephone communication network used for digital data communication.

The processing device 500 may offer the possibility to operate a graphical user interface and/or an application 501. The graphical user interface and/or an application 501 may supported by a database management system interface 502 enabling and controlling the communication to the database management system 600.

The method for defining a complex type or the method for retrieving and modifying a complex type according to an embodiment of the invention may be carried out by processing device 500. The processing device may provide components for carrying out the respective operations or the respective operational sequences. The graphical user interface (GUI) offering a graphical defining and/or modifying of a complex type may be also provided by the processing device 500.

Fig. 8b illustrates an arrangement of a database management system (DBMS) and an application server and a graphical user interface (GUI) displaying device.

A database management system 600, a processing device 510 and a processing device 520 may be provided. The database management system comprises at least one relational database. The database management system 600 may be a relational database management system. The database management system may be connected to the processing device 510 via a network 410. The network 410 may be a local area network, a wide area network or any other network enabling the communication of a database management system instruction protocol. The network 410 may be an interconnected network comprising several network. A so called gateway may connect different digital communication networks and may enable a communication between devises connected to different networks via a gateway connected to each of the different networks. Moreover, the network 410 may also a wireless network, such as a wireless local area network or a Bluetooth network. Further, the network may comprise additionally telephone communication network used for digital data communication.

The processing device 510 may be a serving processing device or a server, respectively. The processing device may offer the possibility to operate an application server 511. The application server 511 may by supported by a database management system interface 512 enabling and controlling the communication to the database management system 600.

A graphical user interface (GUI) may be provided by processing device 520, wherein the respective application corresponding to the graphical user interface (GUI) may be carried out by processing device 510 or application server 511 comprised by processing device 510. The processing device 510 and processing device 520 may be connected via a network 420.

The network 420 may be a local area network, a wide area network or any other network enabling the communication of a database management system instruction protocol. The network 420 may be an interconnected network comprising several network. A so called gateway may connect different digital communication networks and may enable a communication between devises connected to different networks via a gateway connected to each of the different networks. Moreover, the network 420 may also a wireless network, such as a wireless local area network or a Bluetooth network. Further, the network may comprise additionally telephone communication network used for digital data communication.

The user may interact with the graphical user interface for defining or modifying a complex types whereas the processing of the operations sequence may be carried out by processing device 510. The processing device 520 may have only to provide the possibility to operate the graphical user interface (GUI). This may be provided by using a standardized graphical user interface (GUI) providing application on the processing device 520, such as a HTML client software. The graphical user interface (GUI) may be realized by Java-Applications or Java-Beans which offers the possibility to provide the method for defining or modifying a complex types according to an embodiment of the invention to several different processing devices, such as personal computers (PC), personal digital assistant (PDA), mobile notebook and likely devices offering a standardized graphical user interface providing software.

According to another embodiment of the invention, the apparatus for defining a complex type and apparatus for retrieving and modifying a complex type may have the following structural elements:
1) Apparatus for defining a complex type of a relational database that provides a plurality of basic types, said apparatus comprising:
   - a code section containing instructions for a graphical user interface (GUI) on a user display for graphically defining said complex type,
   - a code section containing instructions for receiving a graphical definition of said complex type on the basis of said basic types, said complex type having a hierarchical structure,
   - a code section containing instructions for displaying said hierarchical structure of said complex type and
   - a code section containing instructions for storing said complex type.
2) Apparatus according to 1), said apparatus comprising:
   - a code section containing instructions for receiving a graphical definition of said complex type on the basis of other complex types,
   wherein said other complex types are based on said basic types, said other complex types having a hierarchical structure.
3) Apparatus for retrieving and modifying a complex type of a relational database that provides a plurality of basic types, said apparatus comprising:
   - a code section containing instructions for retrieving said complex type, said complex type having a hierarchical structure,
   - a code section containing instructions for displaying said hierarchical structure of said complex type,
   - a code section containing instructions for graphically modifying said complex type on the basis of said basic types and
   - a code section containing instructions for storing said complex type.
4) Apparatus according to 3), said apparatus comprising:
   - a code section containing instructions for extracting said complex type from a table of said relational database.
5) Apparatus according to 3) to 4), said apparatus comprising:
   - a code section containing instructions for receiving a graphical modification of said complex type on the basis of other complex types,
   wherein said other complex types are based on said basic types, said other complex types having a hierarchical structure.
6) Apparatus according to 1) to 5), said apparatus comprising:
   - a code section containing instructions for implementing said complex type.
7) Apparatus according to 1) to 6), said apparatus comprising:
   - a code section containing instructions for providing graphical forms for defining properties of a type element of said complex type.
8) Apparatus according to 7), said apparatus comprising:
   - a code section containing instructions for receiving properties in accordance with said graphical forms.
9) Apparatus according to 1) to 8), said apparatus comprising:
   - a code section containing instructions for providing graphical menus for defining properties of a type element of said complex type.
10) Apparatus according to 9), said apparatus comprising:
   - a code section containing instructions for receiving a selection comprising at least one menu item of said graphical menus.
11) Apparatus according to 9) to 10), said apparatus comprising:
   - a code section containing instructions for providing graphical context menu for defining properties of a type element of said complex type.
12) Apparatus according to 1) to 11), said apparatus comprising:
   - a code section containing instructions for applying said complex type upon a part of a table of said relational database.
13) Apparatus according to 1) to 12), said apparatus comprising:
   - a code section containing instructions for generating automatically a SQL type statement based on said complex type.

While the present innovation has been described in connection with the embodiments thereof, it will be readily recognized by those skilled in the art that those embodiments are for exemplary purposes only without limiting the spirit and the scope of the present invention.

## Claims

1. Method for defining a complex type for a relational database providing a plurality of basic types , comprising
- providing a graphical user interface (GUI) responsive to user input to define said complex type as a hierarchical structure of basic types,
- receiving user input defining said complex type,
- displaying said complex type as a hierarchical structure of basic types in response to the user input, and
- storing a definition of said complex type.

2. Method according to claim 1, wherein said operation of receiving user input is carried out by:
- receiving a graphical definition of said complex type on the basis of basic types or other complex types,
wherein said other complex types are based on said basic types, said other complex types having a hierarchical structure.

3. Method for retrieving and modifying a complex type of a relational database providing a plurality of basic types, comprising:
- retrieving said complex type, said complex type having a hierarchical structure of basic types,
- displaying said complex type,
- providing a graphical user interface (GUI) responsive to user input to modify said complex type,
- receiving user input modifying said complex type,
- displaying said modified complex type as a hierarchical structure of basic types, and
- storing a definition of said complex type.

4. Method according to claim 3, further comprising:
- extracting said complex type from said relational database.

5. Method according to claim 3 or claim 4, wherein said operation of receiving user input is carried out by the operation of:
- receiving a graphical modification of said complex type on the basis of basic types or other complex types,
wherein said other complex types are based on said basic types, said other complex types having a hierarchical structure.

6. Method according to anyone of the preceding claims, wherein said graphical user interface (GUI) comprises a plurality of graphical control elements.

7. Method according to anyone of the preceding claims, wherein said operation of providing said graphical user interface (GUI) is carried out by further operations of:
- providing graphical forms for defining properties of a type element of said complex type.

8. Method according to claim 7, wherein said operation of receiving is carried out by further operation of:
- receiving properties in accordance with said graphical forms.

9. Method according to anyone of the preceding claims, wherein said providing of said graphical user interface (GUI) is carried out by the further operation of:
- providing graphical menus for defining properties of a type element of said complex type.

10. Method according to claim 9, wherein said operation of receiving is carried out by further operation of:
- receiving a selection comprising at least one menu item of said graphical menus.

11. Method according to claim 9 or claim 10, wherein at least one graphical menu is a graphical context menu.

12. Method according to anyone of the preceding claims, wherein said complex type comprises a plurality of type elements that comprise structuring elements and basic type elements,
wherein said structuring elements comprise further structuring elements and basic type elements and said basic type elements are based on said basic types.

13. Method according to anyone of the preceding claims, wherein said displaying of said hierarchical structure of said complex type is based on graphical elements.

14. Method according to claim 12 or claim 13, wherein said graphical elements comprise graphical structuring elements and graphical basic type elements, wherein said graphical structuring elements represent said structuring elements and said graphical basic type elements represent said basic type elements.

15. Method according to anyone of the preceding claims, further comprising:
- implementing said complex type.

16. Method according to anyone of the preceding claims, further comprising
- applying said complex type upon said relational database.

17. Method according to anyone of the preceding claims, wherein said relational database is a structured query language (SQL) database.

18. Method according to claim 17, wherein said method is carried out by further operation of:
- generating automatically an SQL type statement based on said complex type.

19. Software tool for handling a complex type of a relational database, comprising program code for carrying out the operations of anyone of claims 1 to 18, when said program code is implemented in a computer program.

20. Computer program for handling a complex type of a relational database, comprising program code for carrying out the operations of anyone of claims 1 to 18, when said program code is executed on a computer.

21. Computer program product for handling a complex type of a relational database, comprising program code components stored on a computer readable medium for carrying out the method of anyone of claims 1 to 18, when said program code components are executed on a computer.

22. Apparatus for defining a complex type of a relational database that provides a plurality of basic types, said apparatus comprising:
- an editor for providing a graphical user interface responsive to user input to define a complex type as a hierarchical structure of basic types,
- a display for displaying said complex type as a hierarchical structure of basic types, and
- a component for storing said complex type.

23. Apparatus for retrieving and modifying a complex type of a relational database that provides a plurality of basic types, said apparatus comprising:
- a component for retrieving said complex type, said complex type having a hierarchical structure of basic types,
- a display for displaying said hierarchical structure of said complex type,
- an editor for providing a graphical user interface responsive to user input to define a complex type as a hierarchical structure of basic types, and
- a component for storing said complex type.

24. Apparatus according to claim 22 or claim 23, wherein said apparatus comprises a relational database.

25. Network system for defining a complex type of a relational database, comprising:
- a relational database and
- an apparatus according to claim 22.

26. Network system for retrieving and modifying a complex type of a relational database, comprising:
- a relational database and
- an apparatus according to claim 23.
